# EUROPEAN PATENT APPLICATION

(11) **EP 2 194 464 A1**
(43) Date of publication of application: **09.06.2010**
(21) Application number: 08834333.0
(22) Date of filing: 19.09.2008
(51) Int. Cl.: G06F 17/30, G06Q 30/00

(54) **SEARCH MEDIATION SYSTEM**

(30) Priority: 28.09.2007 JP 2007256128; 31.03.2008 JP 2008093873
(71) Applicant: Dai Nippon Printing Co., Ltd., Shinjuku-ku Tokyo 162-8001 (JP); Kawaguchi, Akihiro, Tokyo 162-8001 (JP)
(72) Inventor: ITOH, Noriaki, Tokyo 162-8001 (JP); KATO, Kazuki, Tokyo 162-8001 (JP)
(74) Representative: Grünecker, Kinkeldey, Stockmair & Schwanhäusser Anwaltssozietät
(86) International application number: PCT/JP2008/067014
(87) International publication number: WO 2009/041366

(57) **Abstract**

A user of the present system registers one's information in searcher information storing means 21 as a searcher in advance. The creators of databases register the provision conditions of information in provision condition storing means 22 as a rule for defining the information granularity of the information to be provided. When search receiving means 23 receives a query request from a user terminal 10, query requesting means 24 sends a search request to each database. When query result acquiring means 25 receives the query results from the each database, search result providing means 26 refers to the searcher information storing means 21 and the provision condition storing means 22, processes the information to be provided into a form at an appropriate information granularity, and sends it to the user terminal 10. A third party registers disclosure restriction information, and this allows disclosure restriction by the third party. In this manner, a search mediation system capable of controlling information to be disclosed according to the searcher who wants to access to the information is provided.

## Description

### TECHNICAL FIELD

The present invention relates to a technology for searching a plurality of databases held by different parties.

### BACKGROUND ART

In recent years, there is a demand for sharing physical distribution management information and article location management information across different companies. As typified by the ebXML (electronic business XML), the scheme for describing the basic information for the information sharing, the framework for sharing and exchanging information, and information items to be exchanged are being standardized. To ensure smooth business operation, the standardized framework for sharing and exchanging information is now being used to allow current and potential business partners to search databases containing business information of the companies as needed. A system or the like for mediating data storage locations has already been proposed (see Japanese Patent Application Laid-Open No. 2006-146293).

Disclosure of the information held by a company could be a chance to acquire new customers. However, the disclosure of the information without restriction causes a problem in that competitors can learn about the company's strategy. The company wants potential business partners to know the contents of the information as well as the presence of the database, while it wants to hide them from troublesome opponents such as competitors to prevent industrial espionage, cracking, and the like. Thus, these demands contradict each other. Standardized methods for sharing and exchanging data are becoming widespread these days, creating common ground. Beneficially, this trend provides potential opportunities to build new profitable business relations not encountered previously. However, although the common ground is created, it is still difficult to find the presence and location of potential business partners.

Search engines are widely used for advertising and introducing internet shopping services for general consumers other than inter-enterprise business transactions, as well as for ordinary content services that do not involve business transactions, and such search engines provide a significant contribution. The UDDI (Universal Description, Discovery, and Integration) method is used in some areas to mainly inform the provision of inter-enterprise information XML Web services on the Internet. The anonymous use of search engines is a type of services desirable for searchers because it is convenient that the locations of all the desired information can be acquired in a one stop manner. However, because of the restrictions on the confidentiality of the business information described above, the provision of a copy of the information in advance on the premise that anonymous access is allowed is difficult to accept for the provider in terms of information management. The UDDI is no more than means for informing the contents of provided services. Therefore, whether or not the information contents desired by a searcher are actually held by a service provider can be determined only after the searcher makes a service contract, completes the procedure for communication, receives permission, and then searches for the desired information. This requires the searcher to exert considerable effort.

At present, the use of RFID (Radio Frequency IDentification) tags is assumed in order to achieve the sharing of physical distribution management information and article location management information among different companies. However, extra cost is required to attach RFID tags for article information tracking to the articles to be managed. The supplier of the articles and the providers of the physical distribution management information are concerned that they are forced to bear the cost of attaching the RFID tags and that it may be difficult to distribute the cost of attaching the RFID tags among the users who benefit from the physical distribution management system. Therefore, in the present circumstances, the widespread use of the framework for sharing and exchanging information, typified by ebXML, is inhibited.

### DISCLOSURE OF THE INVENTION

Accordingly, it is a first object of the present invention to provide a search mediation system that can control access to databases and disclosure of information in a manner depending on the searcher who wants access to the information. It is a second object to provide a search mediation system that allows providers of physical distribution management information to appropriately collect the cost for obtaining the physical distribution management information from the users thereof.

In view of the above circumstances, there is a demand for a search mediation system that can control access to databases and disclosure of information in a manner depending on the searcher who wants access to the information and that allows providers of physical distribution management information to appropriately collect the cost for obtaining the physical distribution management information from the users thereof.

However, when services by such a search mediation system are achieved, a searcher who has no direct business relations with the holders of the databases or does not have an account for the databases can perform a federated search across the databases. Therefore, even if the holder of a database imposes any restrictions on the contents of the data provided from the database, a third party can collect the data in the database from a different database that is not under the control of the holder, and the information management efforts by the holder's company can be meaningless. For example, suppose that data containing a code from which a business partner of the company (a partner to which goods are sold or from which goods are supplied) can be guessed is stored in the database of the business partner. Then when a searcher performs searches across a plurality of databases using a keyword such as the name of a company involved in the business, the searcher can obtain information that the concerned companies want to hide from others.

Accordingly, a third object of the present invention is to provide a search mediation system that allows providers of physical distribution management information to control access to databases and disclosure of information in a manner depending on the user who wants access to the information. Furthermore, the search mediation system can allow any person or party who has relation to the information provided to impose restrictions on that in a rational manner.

To achieve the first and second objects, a first aspect of the invention provides a system for mediating a search when a plurality of databases held by different parties are searched from a user terminal, the system comprising: searcher information storing means for storing information of a searcher; provision condition storing means for storing a provision condition of each of the plurality of databases, the provision condition being represented as a rule for defining a granularity of information provided as a search result; search receiving means for receiving a search request from the user terminal; query requesting means for issuing a query for the search to each of the plurality of databases in response to the search request received; search result retrieving means for acquiring the query result from the each of the plurality of databases; search result providing means for extracting information disclosable to the searcher from the acquired query result on the basis of the information of the searcher and the provision condition or converting the acquired query result to a value at an information granularity level disclosable to the searcher on the basis of the information of the searcher and the provision condition, and then providing the extracted information or the converted value to the user terminal; content charge computing means for computing an information provision charge based on the granularity of the provided information extracted by the search result providing means and on the number of items of the provided information and for computing a processing charge for the information provision charge to thereby compute a charge to the searcher and a share to each of the plurality of databases; and charging-sharing means for creating a record in which the charge and the share computed by the content charge computing means are recorded in association with identification information of the searcher and identification information of a database holder of the retrieved information.

In the search mediation system of the first aspect, the provision condition may be represented as a combination of a searcher category and a set of corresponding granularity processing rules, the searcher category being defined by a set of registered attributes of the searcher and a set of disclosure attributes of the searcher. The granularity processing rule may define the number of granularity levels for each item in each of the plurality of databases and either of a conversion rule or a replacement term, both of which being used to express an original value of the each item at each of the granularity levels. The search result providing means may determine the searcher category of the searcher on the basis of the provision condition, apply a specific granularity processing rule to each item of the original acquired data of the search result to create a converted search result that includes items represented in a predetermined expression of each granularity level, and provide the converted search result to the user terminal.

The search receiving means may extract the information of the searcher serving as a search requestor from the searcher information storing means and refer to the provision condition storing means using the information of the searcher to specify a database or databases disclosable to the searcher. The query requesting means may issue queries only to the specified database.

When processing for converting a value of a searched item obtained from any of the plurality of databases to an expression at a necessary granularity level is performed, the content charge computing means may compute an information granularity reduction processing cost according to a workload in the processing, and the charging-sharing means may record the information granularity reduction processing cost as a charge to the holder of the any of the plurality of databases, the holder contributing as the information holder.

The searcher information storing means may allocate storage areas for three items for each searcher , the three items including: a "demand granularity" representing an expected information granularity level for the search result; a "negotiation policy" that defines a negotiation policy used for a granularity negotiation performed when the information granularity determined based on the provision condition determined in advance by any of the plurality of databases does not satisfy the demand granularity; and an "attainment policy" that determines a policy for terminating the granularity negotiation. When the "demand granularity" desired by the searcher is less than the information granularity determined by the any of the plurality of databases, the search result providing means may automatically re-determine the information granularity to be provided to the searcher on the basis of contents of the "demand granularity," the "negotiation policy," and the "attainment policy" determined in advance by the searcher and, process the search result based on the re-determined information granularity, and provide the processed search result.

To achieve the third object , the most basic embodiment of a second aspect of the present invention provides a system for mediating a search when a plurality of databases held by different parties are searched from a user terminal, the system comprising: searcher information storing means for storing information of a searcher; provision condition storing means for storing a provision condition of each of the plurality of databases, the provision condition being represented as a rule for defining a granularity of information provided as a search result; provision condition restriction storing means for storing third party disclosure restriction information containing a disclosure restriction key that is required by a third party to impose a disclosure restriction on data to be provided to the searcher to coarsen the granularity; search receiving means for receiving a search request from the user terminal; query requesting means for issuing a query for the search to each of the plurality of databases in response to the search request received; query result acquiring means for retrieve the query result from the each of the plurality of databases; search result providing means for extracting information disclosable to the searcher from the retrieved query result on the basis of the information of the searcher and the provision condition, or converting the retrieved query result to a value at an information granularity level disclosable to the searcher, or when the data to be provided to the searcher corresponds to the disclosure restriction key set by the third party, the third party disclosure restriction information is consulted, and conversion required to meet an information granularity level for the data to be provided to the searcher is performed, and then providing the extracted information or the converted value to the user terminal; content charge computing means for computing an information provision charge based on the granularity of the provided information extracted by the search result providing means and on the number of items of the provided information and for computing a processing charge for the information provision charge to thereby compute a charge to the searcher, a charge to the third party who has requested processing for the disclosure restriction, and a share to each of the plurality of databases; and charging-sharing means for creating a record in which the charges and the share computed by the content charge computing means are recorded in association with identification information of the searcher, identification information of the third party who has requested processing for the disclosure restriction, and identification information of a provider of the provided information.

In the search mediation system of the second aspect, it is desirable that the provision condition be represented as a combination of a searcher category and a set of corresponding granularity processing rules, the searcher category being defined by a set of registered attributes of the searcher and a set of disclosure attributes of the searcher. It is also desirable that the granularity processing rule define the number of granularity levels for each item in each of the plurality of databases and either of a conversion rule or a replacement term, both of which being used to express an original value of the each item at each of the granularity levels. It is also desirable that the search result providing means determine the searcher category of the searcher on the basis of the provision condition and apply a specific granularity processing rule to each item of the original acquired data of the search result to create a converted search result that includes items represented in a predetermined expression of each granularity level, in order to apply which conversion rule to the searcher on the bases of the provision condition ordered by the database respond the query result, and applies a specific granularity processing rule to each item of the query result to create a converted search result that includes each element of the search results converted to a alternative wording by a predetermined granularity level and provide the converted search result to the user terminal.

The search receiving means may extract the information of the searcher serving as a search requestor from the searcher information storing means and refer to the provision condition storing means using the information of the searcher to specify a database or databases disclosable to the searcher. The query requesting means may issue queries only to the specified database.

The third party disclosure restriction information may be a set of four types of information, the four types of information including: disclosure restriction key information in which a condition for a value of a specific item in data to be provided is described; information for specifying a desirable granularity of the specific item in the data corresponding to the disclosure restriction key, the desirable granularity being specified to a level desired by the third party; a "restriction policy" that defines a negotiation policy used for a granularity negotiation performed when the data to be provided to the searcher corresponds to the disclosure restriction key and when the granularity of the specific item is finer than the desirable granularity and is required to be processed; and an "attainment policy" that determines a policy for terminating the granularity negotiation. When an information granularity of the data to be provided is finer than the "desirable granularity" desired by the third party, the search result providing means may automatically re-determine the information granularity to be provided to the searcher on the basis of contents of the "desired granularity," the "restriction policy," and the "attainment policy" determined in advance by the third party, process the search result based on the re-determined information granularity, and provide the processed search result.

More desirably, in the most basic embodiment of the search mediation system according to the second aspect of the invention or in each of the more desirable embodiments, the search mediation system has a function corresponding to an emergency privileged search that is distinguished from an ordinary search.

The function corresponding to the emergency privileged search may be achieved by providing emergency privilege assigning means and using the above-mentioned search result providing means. The emergency privilege assigning means including means for recording and storing a public key of an authority institution and verifying authenticity of an electronic signature. When an electronic signature different from the electronic signature of a sender is attached to a search request received, the emergency privilege assigning means determines whether or not the attached electronic signature is an authentic signature created by the authority institution. If the attached electronic signature is authentic, the emergency privilege assigning means creates information for distinguishing the requested search from an ordinary search, records the requested search as an emergency privileged search, and registers a search target specified by the search request as a search target article in an emergency privileged search target data table as a single record. The search result providing means is configured such that, when search results of the emergency privileged search are collected, the emergency privileged search target data table is consulted; only a search result record including information of an article corresponding to the search target article is retained with a granularity of the search result record remaining unchanged; the rest of the search result records are discarded to create collected search results; and the collected search results are provided to the searcher.

To achieve the objects, a third aspect of the invention provides a software program for operating a computer as a search mediation system according to any of the first and second aspects of the invention.

In the first aspect of the present invention, the search mediation system is interposed between a searcher and databases provided by database holders, and the information of the searcher and the provision conditions of the databases are recorded in advance. Disclosable information that varies depending on the searcher who made a search request is extracted from the searched information, or the searched information is provided after converted in a disclosable form that varies depending on the searcher. Therefore, the information to be disclosed can be controlled depending on the searcher who wants to access to the information. The database holder through the databases can obtain information usage charges according to the amounts of the provided information and can recover the costs for creating physical distribution management information. The search mediation system can recover the cost for information granularity reduction processing from the information providers and can use the recovered cost as the operation cost of the system.

In the second aspect of the invention, the search mediation system is interposed between a searcher and databases provided by database holder, and the information of the searcher and the provision conditions of the databases are recorded in advance. Disclosable information that varies depending on the searcher who made a search request is extracted from the searched information, or the searched information is provided after converted into a disclosable form that varies depending on the searcher. Therefore, the information to be disclosed can be controlled depending on the searcher who wants to access to the information. In addition, by registering the third party disclosure restriction information in the search mediation system in advance, any party who is involved in the physical distribution management information provided to the searcher can impose restrictions on the information provided to the searcher in a rational manner. Therefore, participation of the creators of databases who intend to provide information to the search mediation system is facilitated, and a system with high convenience can be achieved.

### BRIEF DESCRIPTION OF THE DRAWINGS

Fig. 1 is a general block diagram of a first embodiment of a search mediation system according to the present invention.
Fig. 2 is a table showing an example of searcher information stored in searcher information storing means 21.
Fig. 3 is a table showing the rules of granularity processing.
Fig. 4 is a diagram showing the hierarchical structure of article locations, which are one of the items in article information.
Fig. 5 is a table showing class definitions stored in provision condition storing means 22.
Fig. 6 is a table of class correspondences for different searcher categories that are stored in the provision condition storing means 22.
Fig. 7 is a table showing an example of the information stored in a database 30a.
Fig. 8 is a table showing correspondences between searchers and creators.
Fig. 9 is an exemplary table of unit prices of information provision that are set in the database 30a.
Fig. 10 shows an example of comparisons between the demand granularity of a searcher and the default granularity of an information provider.
Fig. 11 is a flowchart describing the operation of disclosure granularity determination processing, which is a function of search result providing means 26.
Fig. 12 is a flowchart describing the operation of granularity negotiation processing, which is a function of the search result providing means 26.
Fig. 13 is a schematic flowchart of search processing in the first embodiment.
Fig. 14 is a schematic flowchart of registration processing in the first embodiment.
Fig. 15 is a schematic flowchart of registration processing in the first embodiment.
Fig. 16 is a schematic flowchart of search processing in the first embodiment.
Fig. 17 is a general block diagram of a second embodiment of the present invention.
Fig. 18 is a granularity degrading instruction object data key table (T100) specified by a third party.
Fig. 19 is a class definition table (T105) defined by the third party.
Fig. 20 is a restriction attainment target class setting table (T102) for different searcher categories that is set by the third party.
Fig. 21 is a restriction attainment target class setting table (T103) for different database information provider categories that is set by the third party.
Fig. 22 is a third party data filter instruction table (T104).
Fig. 23 is a third party granularity degradation indemnity table (T200) set by an information provider.
Fig. 24 is a flowchart describing the flow of the operation of third party disclosure restriction processing.
Fig. 25 is a flowchart describing the granularity negotiation processing associated with the third party disclosure restriction processing.
Fig. 26 is a flowchart describing the flow of the operation of emergency privileged search processing.

### BEST MODE FOR CARRYING OUT THE INVENTION

### <First embodiment>

### (Overview)

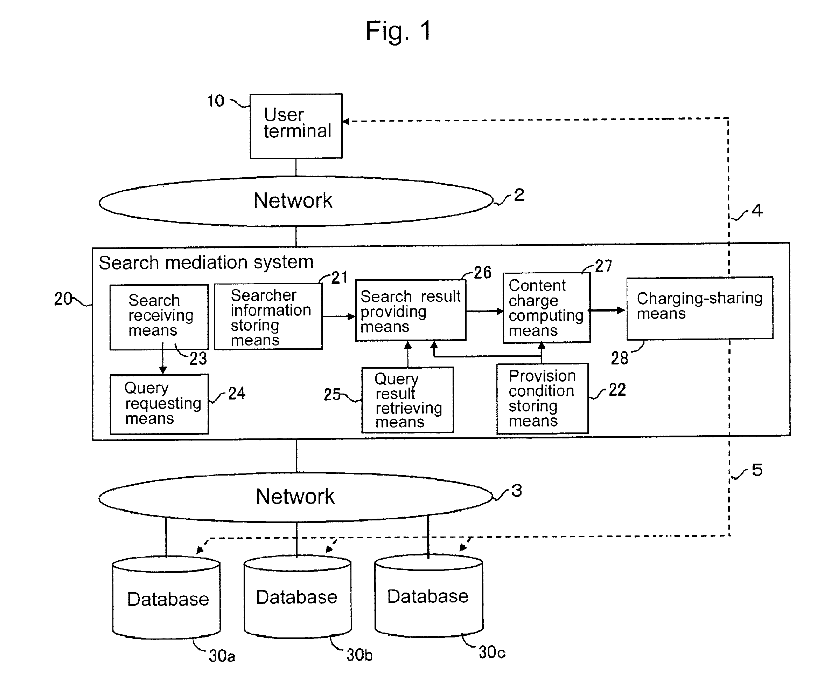

Hereinafter, a preferred embodiment of the present invention will be described in detail with reference to the drawings. Fig. 1 is a block diagram showing the first embodiment of a search mediation system according to the present invention. In Fig. 1, reference numeral 10 represents a user terminal; 20 represents a search mediation system; and 30a to 30c represent independent database systems (hereinafter simply referred to as databases). The user terminal 10 and the search mediation system 20 are connected through a network 2. The search mediation system 20 and the databases 30a to 30c are connected to a network 3. The networks 2 and 3 may be the same network.

The user terminal 10 is a terminal unit used by a user who performs a search and is a general-purpose computer that can access the search mediation system 20 through the network. The search mediation system 20 is a server computer having a function of relaying query to the databases on the network in response to a query request from the user terminal 10 and returning the query results to the user terminal 10. The search mediation system 20 includes searcher information storing means 21, provision condition storing means 22, search receiving means 23, query requesting means 24, query result acquiring means 25, search result providing means 26, content charge computing means 27, and charging-sharing means 28.

The searcher information storing means 21 is storing means for storing information about searchers. The provision condition storing means 22 is storing means for storing the provision conditions of the databases 30a to 30c. The search receiving means 23 has a function of receiving a search request from the user terminal 10. The query requesting means 24 has a function of issuing a request for the search to the databases 30a to 30c in response to the search request received from the user terminal 10. The query result acquiring means 25 has a function of acquiring the query results from the databases 30a to 30c. The search result providing means 26 has a function of referring to the searcher information stored in the searcher information storing means 21 and the provision conditions stored in the provision condition storing means 22, extracting, from the query results acquired from the databases 30a to 30c, only search results disclosable to the searcher, and providing the disclosable search results to the user terminal 10 serving as a search requestor.

The content charge computing means 27 has a function of computing an information provision charge and a processing charge therefore on the basis of the granularity and the number of items of the provided information extracted by the search result providing means 26 and then computing a charge to the searcher and shares to the databases. The number of items does not always correspond to the number of records. The charging-sharing means 28 creates records of search charges charged to the searchers and records of shares of the rewards for the provision of information that are distributed to the databases 30a to c. These records are created in association with the identification information of the searchers and the identification information of the information providers. The charges and shares in the records are notified to the searchers and the holders of the databases, respectively, for example, by mail or a telecommunication method such as e-mail (broken arrows 4 and 5 in Fig. 1 represent the notifications).

The databases 30a to 30c are managed by different companies, and the access to the databases from the search mediation system 20 is permitted. The databases are independent of one another and do not communicate unless the search mediation system 20 intervenes between them. In Fig. 1, the network 2 that connects the user terminal 10 to the search mediation system 20 and the network 3 that connects the search mediation system 20 to the databases 30a to 30c may be the same or different. The communication from the user terminal 10 to the databases 30a to 30c is potentially possible. However, the addresses of the databases are not known to the user terminal 10, and the presence of the user terminal 10 is unknown to the databases 30a to 30c. Therefore, direct access is not permitted. Since important information managed by companies is recorded on the databases 30a to 30c, the access to the databases is permitted only to the search mediation system 20. As described above, the direct access from the user terminal 10 to the databases 30a to 30c is not permitted, and the access must be made via the search mediation system 20. In other words, with the above configuration, a searcher need not identify the addresses of the databases 30a to 30c. In practice, a searcher need not negotiate with each of the holders of the databases 30a to 30c to make an access permission contract.

The search mediation system 20 is implemented by installing a dedicated program on a server computer connected to the networks. Information data storage areas used as the searcher information storing means 21 and the provision condition storing means 22 are provided in a mass storage system such as a hard disk. The Internet may be used as the network for connecting the user terminal 10 to the search mediation system 20. In such a case, when the search mediation system 20 has a function as an XML Web service server, the access from the user terminal 10 to the search mediation system 20 can be achieved using the XML Web service. To impart the XML Web service function to the search mediation system 20, software (for example, Apache axis (registered trademark)) is installed on the computer constituting the search mediation system 20.

### (Date structure)

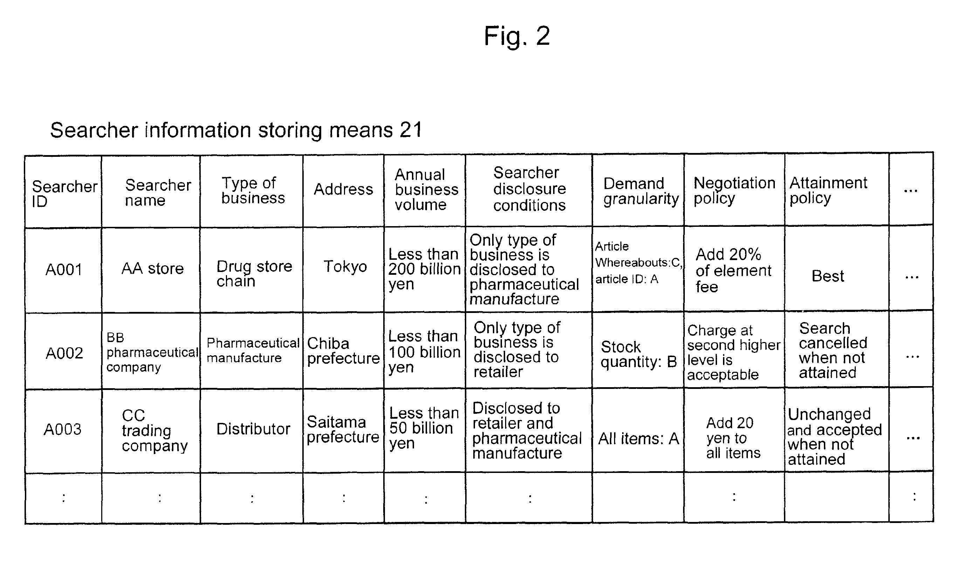

Fig. 2 is a table showing an example of searcher information stored in the searcher information storing means 21. Searchers who use the present system must register their information as the searcher information in advance. In the present embodiment, as shown in Fig. 2, the registered searcher information includes the name of the searcher, type of business, address, annual business volume, and searcher information disclosure conditions. The registered searcher information further includes items related to granularity negotiations for the information to be disclosed (described later), and these items include demand granularity, negotiation policy, attainment policy, and other types of information. Examples of other types of information include public key data that specifies the user terminal for a searcher so that the communication between the user terminal of a searcher and the search mediation system 20 is concealed. A searcher ID for identifying each searcher is issued to the each searcher. The searcher IDs are registered in the searcher information storing means 21 in association with the searchers. The searcher information disclosure conditions define the conditions when the searcher information is disclosed to holders of a database. The searcher information disclosure conditions can be set for each item in the searcher information and according to the types of the business of the holders. Information granularities desired by the searchers are registered for each information item in the column of the demand granularity. Preset conditions for a surcharge that a searcher offers to pay to obtain information at a finer granularity level when the disclosure granularity set by the holder of a database is less than the demand granularity set by the searcher are registered in the column of the negotiation policy. The searcher information disclosure conditions of one searcher may include a plurality of types of information, so long as no contradiction arises. The attainment policy defines the policy of terminating the negotiations (how to compromise) when the searcher and the creator of a database do not agree on the granularity of information to be disclosed.

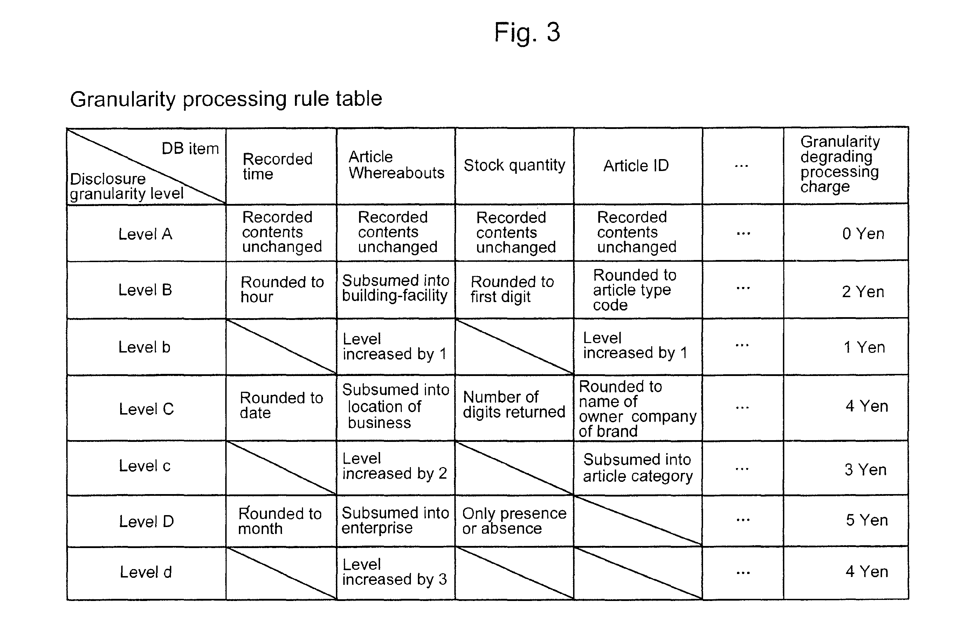

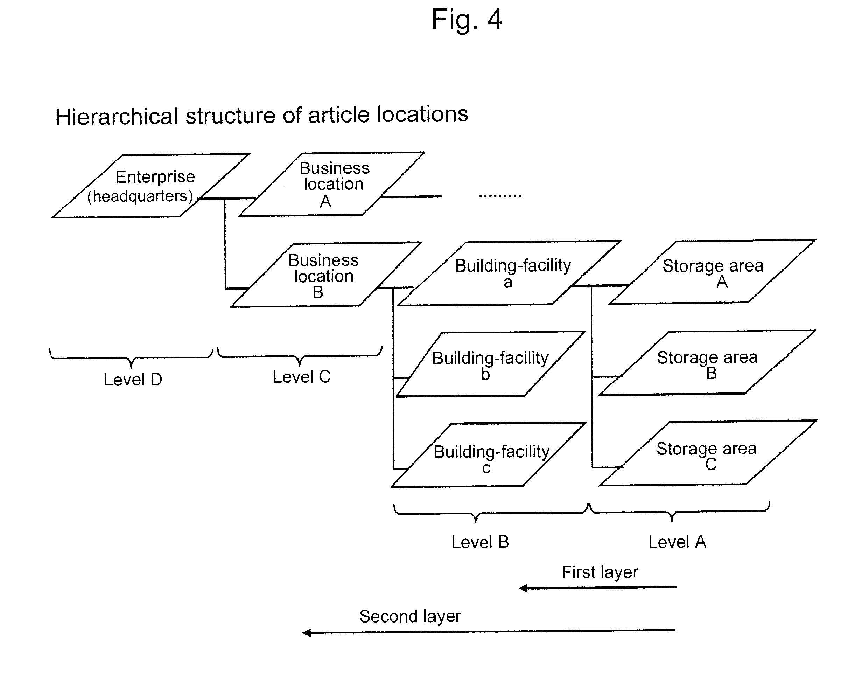

In the search mediation system 20, the "granularity" of the information obtained by searching each database can be controlled based on the relation between the searcher and the holder of the each database, and the information with the controlled granularity is provided to the searcher. More specifically, the search result providing means 26 has a granularity processing rule table shown in Fig. 3 that is defined by the holder of each database. The value of each item recorded in the each database is converted to a value represented at a granularity that is defined for the each item depending on the disclosure granularity level, and the converted value is provided to the searcher. The disclosure granularity level for each item in a database when a search request is received is determined according to a table of class correspondences for different searcher categories and a class definition table described later. As shown in Fig. 3, in the granularity processing rule table, the accuracy of the information to be provided is defined for each item at a maximum of 7 levels (level A to level d). In the granularity processing, a "value" conversion rule is defined for each DB item according to the granularity level. In other words, the expression terms or conversion rules for the "values" are hierarchically defined in advance at different granularity levels, from level D (coarse granularity level) to level A (finest level), as exemplified in Fig. 4.

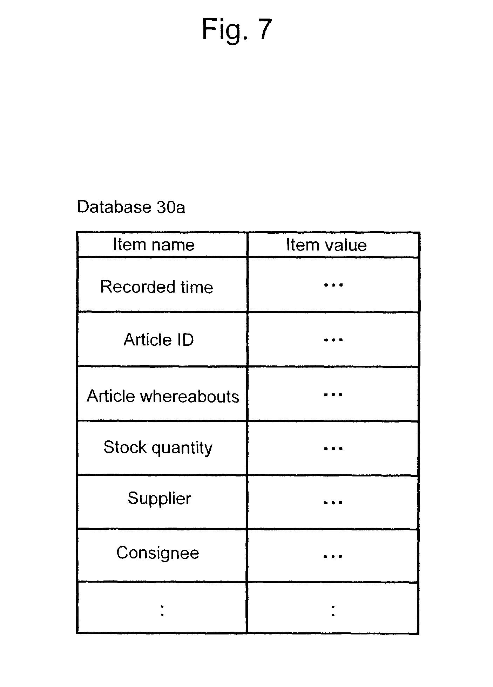

An example of the information recorded in the database 30a is shown in Fig. 7. As shown in Fig. 7, a single record of information including items such as recorded time, article ID, article location, stock quantity, supplier, and consignee is recorded in the database 30a. Generally, this single record corresponds to data obtained by reading one RFID tag using a reader. Therefore, when a plurality of tags are read by the reader at one time, a plurality of article IDs included in the information recorded in the plurality of read tags are recorded in the column of article ID. In such a case, the number of articles that is used to compute an information provision charge by the content charge computing means 27 is not one but is counted as the number of the article tags. The article locations are recorded using the hierarchical structure as shown in Fig. 4. The databases 30a to 30c are independent of each other, and the databases 30b and 30c may have structures different from that shown in Figs. 4 and 7.

Fig. 4 is a table showing the hierarchical structure of the item "article whereabouts" (the expression terms and conversion rules used to represent the item at different granularity levels). The item "article whereabouts" has four levels of granularity, from level A to level D. For example, when the value of the item "article whereabouts" is represented at level A, it is represented as a value such as "storage area A" or "storage area B." At level B, the value of the item "article whereabouts" is represented as "building-facility a," "building-facility b," or the like. More specifically, a set of values (terms) that can be used at each granularity level is defined in advance. When the value represented as any of "storage area A," "storage area B," and "storage area C" at level A must be represented at a next higher granularity level (level B), the value is converted to "building-facility a." More specifically, the term "building-facility a" is used as a replacement term for "storage area A," "storage area B," and "storage area C." The hierarchical structure shown in Fig. 4 shows a conversion rule for replacing a lower level value with a higher level value.

The reduction in the information granularity requires a data processing computational load on the search mediation system 20. The conversion processing should be performed individually per each database because it is under the data holding company's prerogative to ensure the security of the information and to maintain the economic value thereof. However, since the processing is instead performed on the search mediation system 20, it is reasonable that the cost for the granularity reduction processing is born by the holders of the databases who provide information. Therefore, the cost for the granularity reduction processing is accumulated by withholding from the affair share of the contributed contents in the content charge computing means 27 for each processed term on the basis of the number of reduction levels or irrespective of the levels or in a comprehensive manner irrespective of the number of processed terms. The information granularity reduction processing cost accumulated in the content charge computing means 27 is sent to the charging-sharing means 28 each time a search and the response thereto are completed or as a total on a regular (for example, monthly) basis. More specifically, a share of the rewards for the provision of information is also accumulated in the content charge computing means 27, and the information granularity reduction processing cost is subtracted from the share to each of the holders of the databases. The resultant amount is recorded in association with the identification information of each information contributor using a function of the means 28. A settlement is made based on the above records using electronic or conventional business transaction means, and each of the databases 30a to c can receive a share that is computed as the total of the information granularity reduction processing cost for the provided information items and the rewards based on the number of contributed information items.

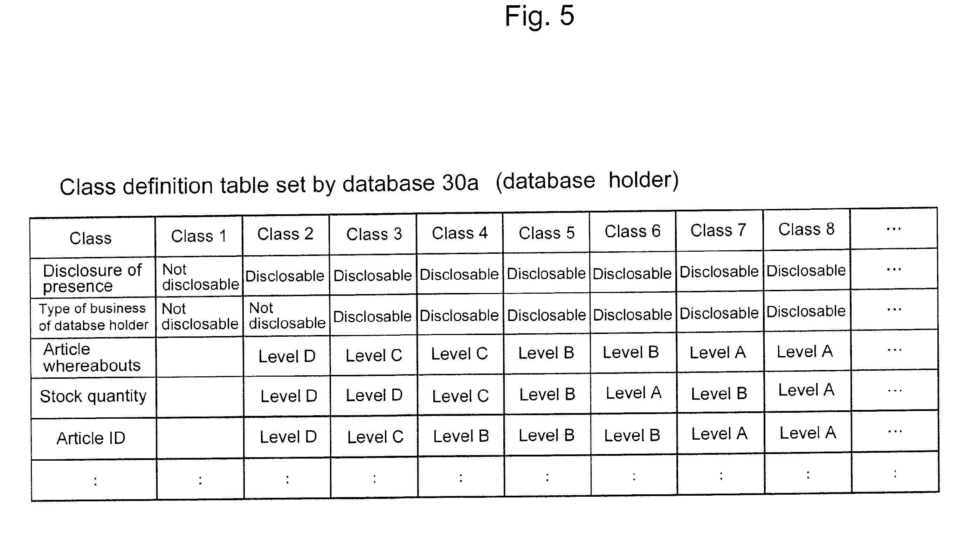

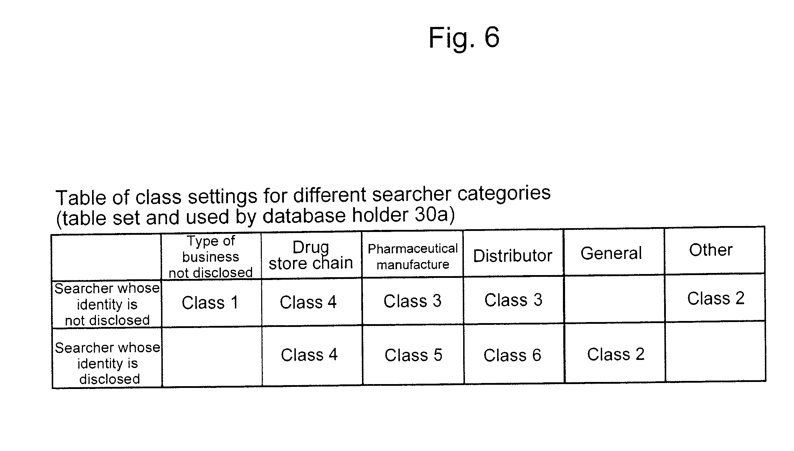

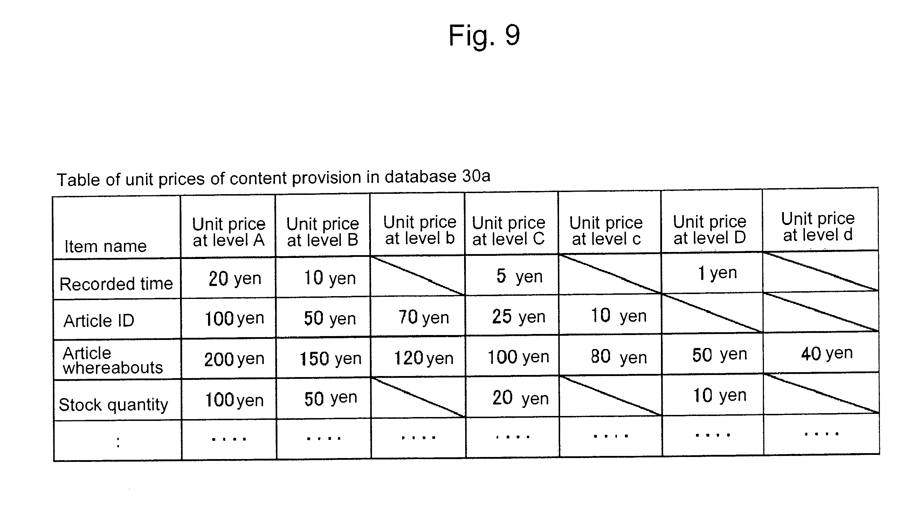

The class definition table, the table of class correspondences for different searcher categories, and a table of unit prices of information provision are recorded in the provision condition storing means 22 as provision conditions. In the present embodiment, the provision conditions are determined using the class definition table and the table of class correspondences for different searcher categories. Fig. 5 shows an example of the class definition table, and Fig. 6 shows an example of the table of class correspondences for different searcher categories. Fig. 9 shows an example of the table of unit prices of information provision. In the class definition table, the disclosure level of each information item stored in a database is set for each class. The class is a set of disclosure granularity levels that are determined for all the items in the database. In the example shown in Fig. 5, class 1, class 2,..., and the like are used as the names of the sets of the disclosure granularity levels. More specifically, a set of disclosure granularity levels is specified by class 1, class 2, or the like. With the class definition table, the holder of the database can easily set the disclosure granularity levels of items without setting them individually, and the amount of information to be disclosed is thereby set.

When a searcher who uses this mechanism and the databases share common data exchange format specifications, the information granularity processing may cause incompatibilities between the data format of the original standard record and the data format of the record after the conversion processing. In such a case, the search result providing means 26 may create data having a format different from that of the ordinal record, and the converted data may be provided to the searcher. For example, in Fig. 3, when the record of the article ID is converted to an article classification notation at level c and the format structure of this article classification notation is different from the format structure of the article ID, the reply may have a converted format different from that of the original record. However, when the converted format is outside the shared specifications, a mechanism must be provided which notifies the searcher in advance of the extended or modified format different from that in the common specifications and allows the reception function of the searcher to process and interpret the format.

In the example shown in Fig. 5, class 1 is the severest class, and the restrictions are relaxed as the class number increases. In class 1, the presence of the database is not permitted to be disclosed, and the type of business of the holder of the database is also not permitted to be disclosed. Since the presence of the database is not permitted to be disclosed in class 1, all the items of the information recorded in the database are, of course, not permitted to be disclosed. In class 2, the presence of the database is permitted to be disclosed, but the type of business of the holder is not permitted to be disclosed. In addition, the stock quantity and the whereabouts of the article are permitted to be disclosed at level D. The most detailed information is provided at level A, and coarser information is provided as the level is changed to B, C, and D. Therefore, in class 2, the information about the stock quantity and the whereabouts of the article is provided in a very ambiguous form. In class 3 or higher, the presence of the database and the type of business of the holder are permitted to be disclosed. Therefore, each of the items such as the stock quantity and the whereabouts of the article is disclosed at a more detailed level as the class number increases.

A unit price for information provision is assigned to each of the items according to the granularity. Generally, the contents of information items provided at finer granularities are more useful because of their accuracy and preciseness and contain business secrets having a high economic value. Therefore, the unit price at finer granularities can be set higher than those at coarser granularities but can be set to any value (for example, can be flat) according to the intension of the provider. Fig. 9 shows an example of the table of unit prices of information provision in the database 30a. For example, the article ID at level A (the recorded contents are not modified) is provided at a cost of 100 yen per article, and the article ID at level c (article classification) is provided at a cost of 10 yen per article.

Fig. 6 shows an example of the table of class correspondences for different searcher categories. The searcher categories are used to identify searchers for the convenience of the holder of a database. The searcher categories are freely defined by the holder of the database on the basis of searcher attribute information registered as searcher information, and each searcher category is normally divided into two classifications, i.e., a classification for a searcher whose identity is disclosed and a classification for a searcher whose identity is not disclosed. The "identity" used in the searcher whose identity is (or is not) disclosed means information sufficient to identify the searcher and is the name of the searcher in the present embodiment. The table of class correspondences for different searcher categories shown in Fig. 6 is for an exemplary database, and a similar table is provided for each database. The holder can freely set the classes. Generally, severe classes are assigned to a searcher whose identity is not disclosed, as shown in Fig. 6. A class may be assigned to a searcher by using the name itself of the searcher as a category.

When a category is determined, a disclosure granularity class, which is a combination of disclosure restrictions on items shown in Fig. 5, is determined. However, the disclosure granularity class determined by a provider using the category of a searcher on the basis of the classes for different categories shown in Fig. 6 does not often satisfy the demand granularity recorded in the searcher information storing means 21 shown in Fig. 2, i.e., the information granularity of each item that is desired by the searcher. The search result providing means 26 has a function of automatic negotiating with an information provider to obtain disclosure at a finer granularity on the basis of the demand granularity, negotiation policy, and attainment policy set by the searcher for the purpose of negotiation. The detail of this function will be described in the description of the processing operation of the system.

### (Processing operation)

Next, a description will be given of the processing operation of the system shown in Fig. 1. First, a user registered in the searcher information storing means 21 as a searcher accesses the search mediation system 20 from the user terminal 10 and submits a search request. Then the search receiving means 23 authenticates the searcher and identifies the searcher from among searchers registered in the searcher information storing means 21. For example, passwords are registered in the searcher information storing means 21, and an access user is required to provide a searcher ID and password. To identify the searcher in a more reliable manner to protect communication, a sender certificate encrypted by a secret key issued to the user terminal 10 may be decrypted by a corresponding public key sent previously, and the hash value of the search expression text sent from the searcher may be checked against the hash value of the sent search expression that is obtained using the same hash method as that used at the time of submission. In addition, the search expression text body to be sent may also by encrypted using a public key issued by the search mediation system 20, and the received text body may be decrypted using a secret key in the search mediation system 20. In this manner, the communication through the path can be protected. With the above method, the claimed identity of the searcher can be identified with the identity of a registered user.

After the searcher ID is identified, the search receiving means 23 refers to the searcher information storing means 21 using the searcher ID to obtain the attribute information of the searcher. In the present embodiment, the type of business and the searcher information disclosure conditions are obtained as the attribute information. Next, the search receiving means 23 refers to the provision condition storing means 22 using the obtained attribute information to obtain the addresses of databases disclosable to the searcher. For example, in the examples shown in Figs. 5 and 6, class 1 is assigned to a searcher whose type of business is not disclosed, and the presence of the database is not permitted to be disclosed to such a searcher. Therefore, the addresses are not provided. In the examples shown in Figs. 5 and 6, the addresses of the databases are provided in the other cases. The search receiving means 23 acquires the addresses of databases disclosable to the authenticated searcher in the manner described above.

After the addresses of the databases are obtained from the provision condition storing means 22, the query requesting means 24 issues a request for a query to all the databases from which the addresses are obtained so that the search based on the information in the search request received from the user terminal 10 is performed. When the attribute of the searcher does not match the provision conditions of a database, the address of the database is not provided, and the query request is not sent to this database. This can suppress unnecessary query processing for obtaining query results that are known in advance to be cancelled and discarded by the search mediation system 20 and invalid traffic and processing load during the search. When the addresses of all the databases 30a to 30c are obtained, a search request is sent to the databases 30a, 30b, and 30c.

When the method of sharing and exchanging data is standardized and all the databases 30a to 30c to be searched are adapted to this method, query requests having the same format and including the same contents are sent to the respective databases 30a to 30c. For a database to which the standard method is not applicable, the search expression format of the search request is converted to a format that can be used for the database inherently, and the converted search request is committed using a communication procedure that allows communication with such a database adopting proprietary interface. This is achieved by using a conversion table designed using the specifications of such a database obtained in advance or by using conversion rules according to XSLT (XML Stylesheet Language Transformations).

In each of the databases 30a to 30c, when a query request is received, authentication is made to verify that the query request is sent from the search mediation system 20, and the query request is then accepted. Each database is retrieved based on the contents of the received request to give query results. After the query results are obtained, they are sent from the databases 30a to 30c to the search mediation system 20. The sent search results may include business secrets that must be disclosed to a certain searcher in a limited manner. When the response is sent, processing for identifying the actual searcher and omitting contents that should be hidden from the searcher because of the business relation can be performed on each of the databases 30a to 30c that send the response. However, to implement this processing, the database system developed for the use in the same or affiliated company must be modified to provide a function of information management outside the company to equip the functions for granting access to outsiders, with protecting the business secrets of them, which function is not installed originally. In addition, the load of the information management processing may adversely affect the capacity used for original applications, or the capacity must be increased so as to allow for the information management processing load. In the present invention, the disclosed contents are extracted by the search mediation system 20 on the basis of the provision conditions. Therefore, the databases 30a to 30c are not required to bear the hiding processing load.

In the search mediation system 20, the query result acquiring means 25 acquires the query results sent from the databases 30a, 30b and3 30c. When the respondent databases include a database that uses a communication procedure and a reply format that are different from the standard procedure and format, the search results are acquired using response means suitable for such a database. In addition, means for converting the non-standard inconsistent format on the basis of the specifications thereof obtained in advance as in the search expression conversion is used. In this manner, the conversion to the standard format as those of other replies obtained by the standard method is made as pre-processing, and disclosable information similar to that in other responses can thereby be extracted. Next, the search result providing means 26 refers to the searcher information stored in the searcher information storing means 21 and the provision conditions stored in the provision condition storing means 22 and extracts the search results to be provided. For example, when the searcher ID of the search is A001, the search result providing means 26 refers to the searcher information storing means 21 to obtain the type of business as "drug store chain" and the searcher information disclosure conditions as "only type of business is disclosed to pharmaceutical manufacture." Then the search result providing means 26 refers to the provision condition storing means 22 on the basis of the obtained information.

Next, a description will be given of the processing for the database 30a. Since the conditions of the searcher A001 include "only type of business is disclosed to pharmaceutical manufacture," the search result providing means 26 checks the type of business of the holder of the database 30a. When the holder of the database 30a is a pharmaceutical manufacture, "only the type of business" included in the searcher information of the searcher A001 "is disclosed" to the database 30a. Then the search result providing means 26 refers to the table of class correspondences for different searcher categories (Fig. 6) on the basis of "searcher whose identity is not disclosed" and the type of business "drug store chain," and "class 4" is thereby obtained. Next, the class definition table (Fig. 5) is consulted using "class 4" to thereby obtain "disclosable" for the presence of the database, "disclosable" for the type of business of the holder, "level C" for the article whereabouts, "level C" for the stock quantity, and "level B" for the article ID.

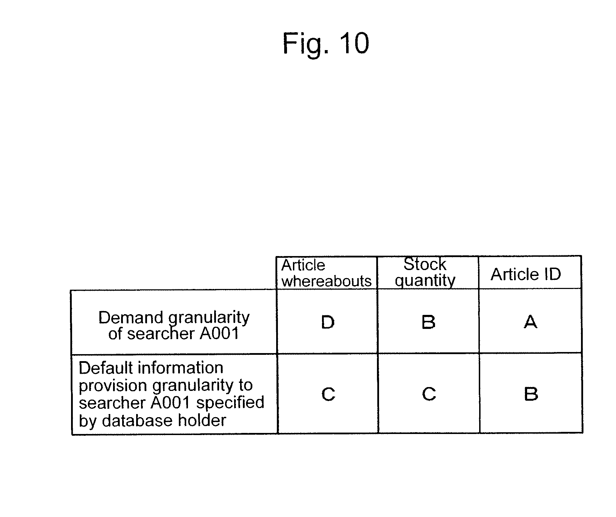

Suppose that the information provision granularity levels desired by the searcher A001 are, for example, "level D" for the article location, "level B" for the stock quantity, and "level A" for the article ID, which are determined from the demand granularity in the searcher information storing means 21. In this case, as shown in Fig. 10, the information about the article whereabouts can be provided at a disclosure granularity level higher than that demanded by the searcher. However, for the stock quantity and article ID, the standard disclosure granularity levels set by the information provider do not satisfy the disclosure granularity levels desired by the searcher. Such inconsistency can often arise because of the difference in standpoint between the information provider and the searcher. In such a case, the granularity negotiation processing function of the search result providing means 26 is operated.

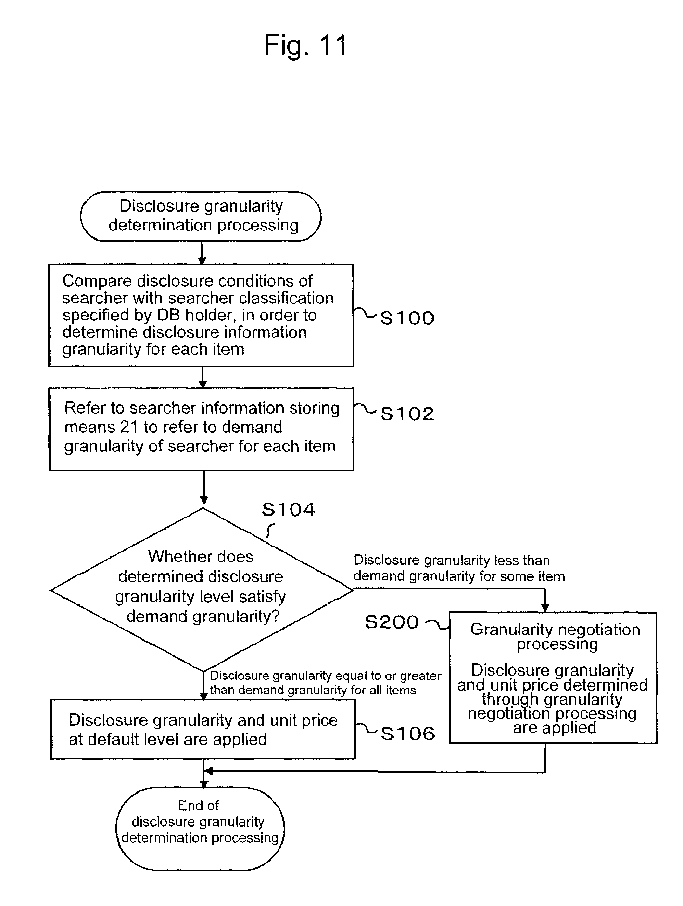

Fig. 11 is a flowchart describing the operation of disclosure granularity determination processing that is an action of the search result providing means 26. The operation of the processing is described using Fig. 11. First, the disclosure conditions of the searcher are read by referring to the searcher information storing means 21, and the default disclosure granularity of each item for the searcher is determined from the table of class correspondences for different searcher categories and the class definition table set by the information provider (S100). The granularity level of each item that is desired by the searcher is determined by referring to the demand granularity for the searcher in the searcher information storing means 21 (S102). The obtained granularity levels are compared to each other (S104). If the default disclosure granularities of all the items satisfy the demand granularity levels of the searcher, the default disclosure granularity levels and unit prices of information are applied (S106). In the example described above, the table shown in Fig. 10 is obtained. In this table, the demand granularity of the article whereabouts, is satisfied, but the demand granularities of the stock quantity and the article ID are not satisfied. Therefore, the granularity negotiation processing is performed (S200). Then the granularity levels and unit prices of information determined by the results of the granularity negotiation processing are used (S106).

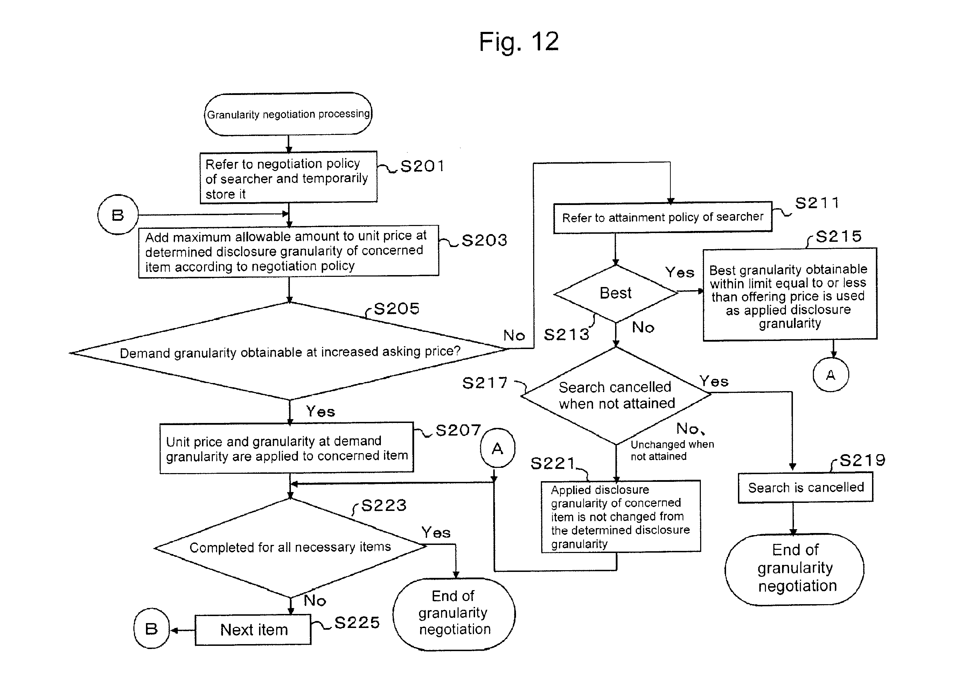

Next, the granularity negotiation processing is described using a flowchart shown in Fig. 12. In the following description, the searcher is A001, and the database is 30a, as in the above example. First, referring to the "negotiation policy" of the searcher in the searcher information storing means 21, the negotiation policy of the searcher is temporarily stored (S201). Next, a maximum allowable amount is added to the price at the determined disclosure granularity of the concerned item according to the negotiation policy (S203). The policy of the searcher A001 is "add 20%." Therefore, the unit price of information for the stock quantity at level C is increased by 20%. A determination is made whether or not this price (the asking price to which the maximum allowable amount is added or the asking price) satisfies (is equal to or greater than) the unit price at the demand granularity of the item (S203). If the asking price satisfies the unit price (Yes in S205), the information of the item is disclosed at the demand granularity, and the unit price at the disclosure granularity level is applied (S207). The contents of the negotiation policy (the value of the policy) may be set such that "the unit price is increased by 20%," "the price at the second higher granularity level is accepted", or "20 yen is added to the present unit price."

If the asking price does not satisfy the unit price at the demand granularity of the item (No in S205), the attainment policy of the searcher in the searcher information storing means 21 is referred (S211). The attainment policy can be set to one of "best," "unchanged if not attained," "search cancelled if not attained," and the like. When the attainment policy is "best" (Yes in S213), the best granularity (the finest granularity) obtainable within the offering price is used as the disclosure granularity and the unit price applied to the item (S215), and the process proceeds to S223. When the attainment policy is "unchanged if not attained" (No in S213), the default granularity is used as the disclosure granularity and the unit price applied to the item (S215), and the process proceeds to S223. When the attainment policy is "search cancelled if not attained," the search specified by the holder is cancelled (S219), and the granularity negotiation processing is stopped and the records including the entities to be cancelled or whole of the query result from database 30a is omitted or discarded immediately.

After the granularity and unit price for the concerned item are determined, a determination is made whether or not the granularity negotiations for all the necessary items are completed (S223). If the negotiation for an item is not completed, the process returns to S203, and the granularity negotiation is repeated for the item.

As described above, the search result providing means 26 can automatically negotiate the granularity of the information to be provided and the price for the provision by comparing the searcher information stored in the searcher information storing means 21 with the conditions of the information provider stored in the provision condition storing means 22. (However, when the search is cancelled during the granularity negotiation, the information acquisition from the database is cancelled.)

Therefore, the default disclosure granularity level C ("subsumed into location of business") set for the searcher A001 by the holder of the database 30a is used as the information of the article whereabout. Master data of the location of business configuration having a structure shown in Fig. 4 describes the affiliation relation of the business establishments of the creator of the database, and the affiliation relation is notified to the search mediation system 20 in advance or supplied from the database 30a each time the search mediation system 20 sends a query. By referring to the master data, the affiliation status of the article can be moved up, based on the obtained article whereabouts information, to a layer of "subsumed into enterprise (headquarters) establishment" which is used as a stepwise semantic attribute assigned to the affiliation hierarchy. In this manner, the information of the location expression that is to be sent to the searcher at the specified information granularity can be obtained. The obtained information is extracted as the reply to the searcher, and the disclosure range specified by the holder of the database 30a and different from the fineness of the article whereabouts information originally contained in the actual query results can thereby be preserved into the search result sending to the searcher. The results of the granularity negotiation processing are applied to the stock quantity and the article ID. More specifically, the information can be provided and acquired in the manner that not only the convenience of the information provider but also the need of the searcher is reflected to a certain extent or that the information disclosure-acquisition policies of the information provider and the searcher compromise with each other in a smooth manner.

Similarly, the searcher acquires information also from other databases at a level corresponding to the searcher information and the provision conditions of the databases.

A description is again given of the determination of the disclosed information. Suppose that the type of business of the holder of the database 30a is a pharmaceutical manufacture. When a searcher A003 searches the database 30a, the searcher information of the searcher A003 is disclosed to the database 30a because the searcher information disclosure conditions include "disclosed to retailer and pharmaceutical manufacture," as shown in Fig. 2. Also, as shown in Fig. 2, since the searcher A003 is a distributor, class 6 is assigned to the searcher A003 by referring to the table of class correspondences for different searcher categories shown in Fig. 6 on the basis of "searcher whose information is disclosed" and "distributor". When the searcher A001 searches the database 30a, the searcher information disclosure conditions include "only type of business is disclosed to pharmaceutical manufacture" as shown in Fig. 2. In this case, since the holder of the database 30a is a pharmaceutical manufacture, only the type of business is disclosed. Class 4 is assigned by referring to the table of class correspondences for different searcher categories shown in Fig. 6 on the basis of "searcher whose identity is not disclosed" and "drug store chain." For class 4, the class definition table shown in Fig. 5 shows that the article location is at level D, the stock quantity is at level C, and the article ID is at level B. Since the article location is at level D, only the name of the company is disclosed. Since the stock quantity is at level C, only the number of digits is disclosed. Since the article ID is at level B, only the type code is disclosed. As described above, even when only the type of business of the searcher is disclosed, i.e., a limited attribute between anonymous and real name attributes is disclosed, an appropriate extraction range is set for the information to be disclosed, and the search can thereby be performed in a reliable manner.

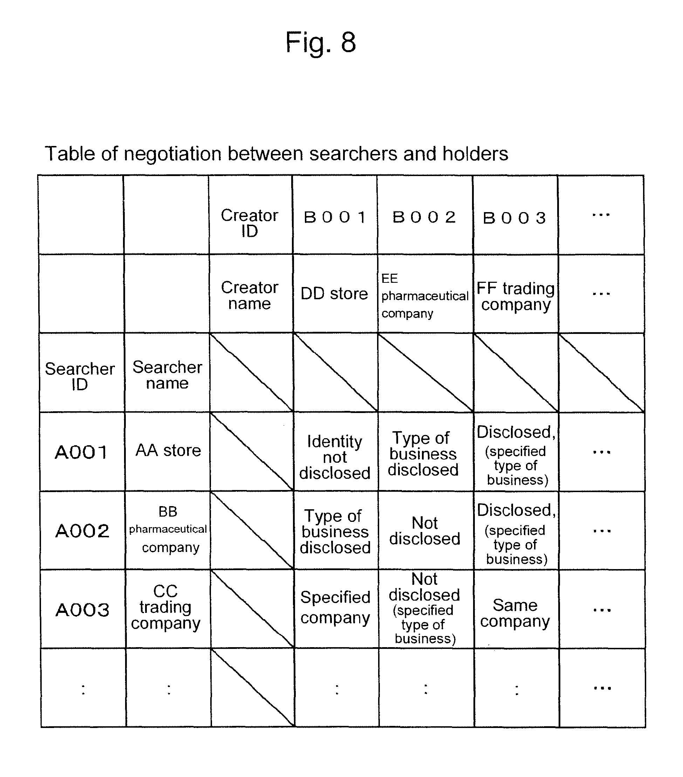

The information to be disclosed is determined, and the search results are provided in the manner described above. However, a searcher- holder correspondence table for holder shown in Fig. 8 may be produced in advance using the searcher information disclosure conditions in the searcher information stored in the searcher information storing means 21. By storing the searcher-holder correspondence table shown in Fig. 8 in a predetermined storage area, the search mediation system 20 can immediately specify a database to which a search request is sent by referring to the searcher-holder correspondence table after the searcher ID is identified. In addition, when the contents of the response to the searcher are determined using the returned query results, the table of class correspondences for different searcher categories shown in Fig. 6 can be consulted at high speed.

The preferred embodiment of the present invention has been described above. However, the present invention is not limited to the above embodiment, and various modifications may be made. For example, in the above embodiment, the class is set based on the type of business of the searcher using the table of class correspondences for different searcher categories (a part of the provision conditions) shown in Fig. 6. However, the class may be set based on other items in the searcher information such as the address or annual business volume of the searcher. In the above embodiment, the provision conditions are determined using the class definition table and the table of class correspondences for different searcher categories. However, the provision conditions may be determined using a combination with other tables.

The charging-sharing means 28 creates the records of search charges to searchers and the records of shares of the information provision rewards to the databases 30a to c as records in association with the identification information of the searchers and the identification information of the providers. In addition, the charging-sharing means 28 may have an online payment function of billing the usage charges to the accounts registered by the searchers and issuing transfer messages of the shares to the accounts registered by the holders of the databases using a protocol used in a dedicated network (not shown) to which the payment institutions are connected.

### (Summary of embodiment 1)

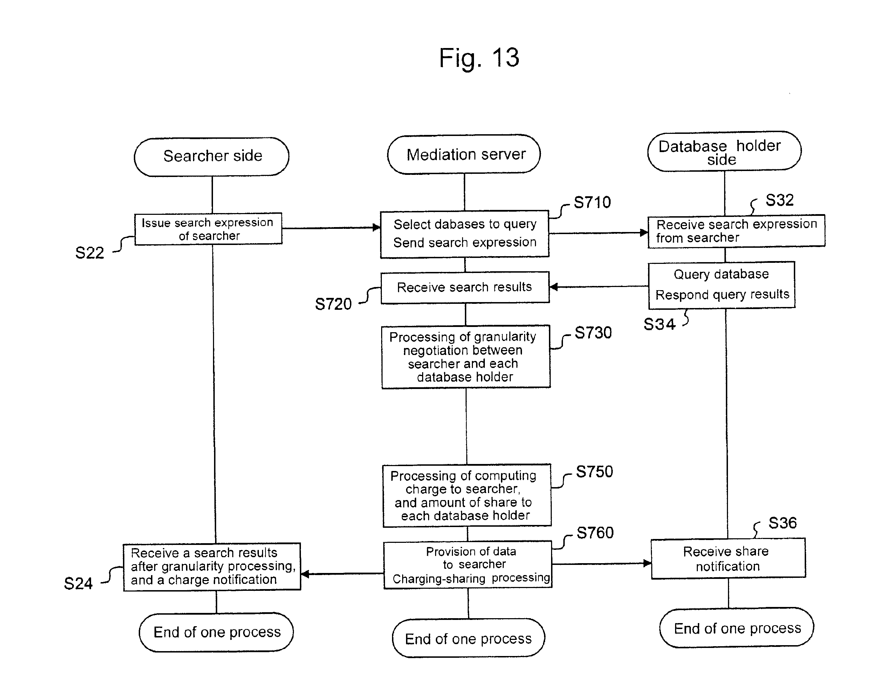

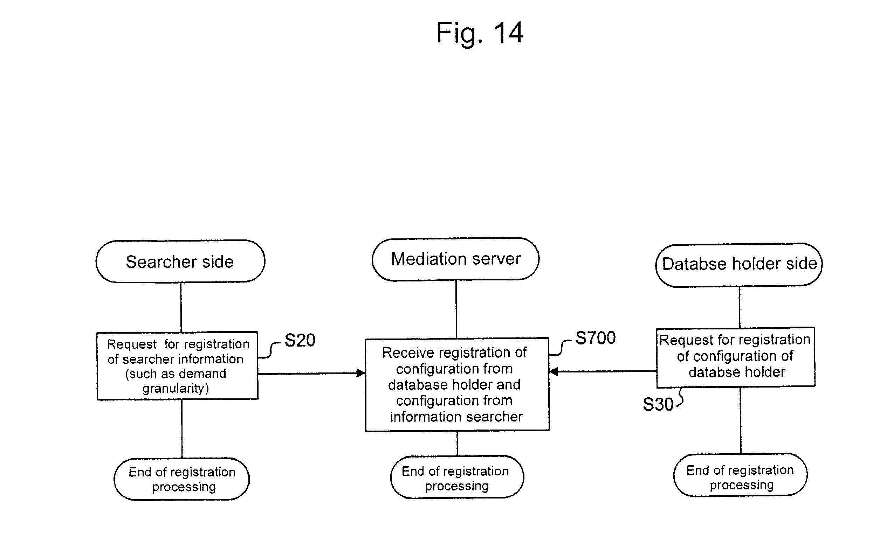

Figs. 13 and 14 are flowcharts describing the outline of the system of embodiment 1 described above in detail. The flow on the left side represents the flow of the processing on the searcher side. The flow at the center represents the flow of processing in the search mediation system 20. The flow on the right side represents the flow of processing in the database server of an information provider. Hereinafter, the operation of the system of embodiment 1 is summarized using Figs. 13 and 14. First, the information required for the search mediation system 20 is set both on the searcher side and on the information provider side (S20 and S30 in Fig. 14). The search mediation system 20 registers the set information in predetermined tables upon registration requests (S700). The searcher issues a search request including a search expression to the search mediation system 20 at necessary timing (S22 in Fig. 13). The search mediation system 20 receives the search request, selects information providers capable of accepting the query request from the searcher through the mediation system 20, and sends a query extracted or converted from the search request for the search to all the selected information providers (S710). Simultaneously, the search mediation system 20 creates a unique search identifier for each search request from the searcher for post-processing. The search identifier is stored in storage means, and a search request with the search identifier is sent to the information providers. Each information provider receives the query expression (S32), searches the database, and returns the results with the search identifier attached thereto to the search mediation system 20 (S34). The search mediation system 20 receives the query results provided from all the information providers to which the query request is sent (S720) and collects the results having a common search identifier. If the granularity of the information provided from an information provider does not satisfy the demand granularity of the searcher, the granularity negotiation processing for the granularities is performed (S730). The charge to the searcher and shares to the information providers are computed based on the results of the granularity negotiation (S750). Then the provision of data to the searcher, the notification of the payment and billing, and the notification of the shares to the information providers are performed (S760). The searcher receives a payment notification (S24). Each information provider receives a notification of the share (S36).

### <Embodiment 2>

Next, a description will be given of a second embodiment of the present invention.

### (Differences from embodiment 1)

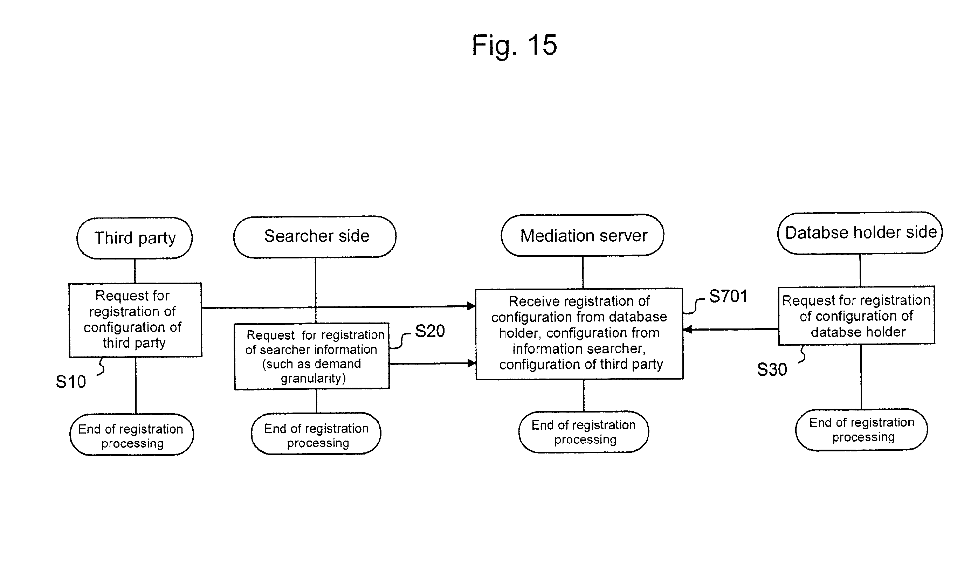

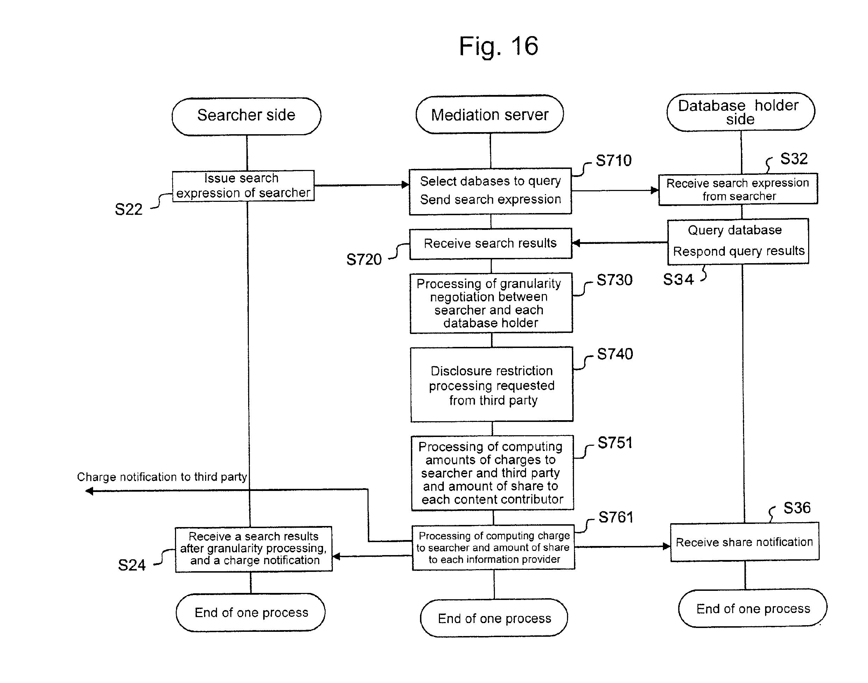

The first embodiment includes the granularity negotiation processing (S730 in Figs. 12 and 13) of negotiating the granularity of the information to be provided between the searcher and a service provider. The second embodiment is characterized in that disclosure restriction processing for the information to be provided is performed by a third party, in addition to the granularity negotiation processing. Figs. 15 and 16 show flowcharts describing the outline of the system of the second embodiment, in comparison with Figs. 13 and 14 (in Figs. 15 and 16, processing steps having the same step numbers as those in Figs. 13 and 14 are the same as the processing steps in the first embodiment, and the description of such processing steps is appropriately omitted in the following description). Flows for the third party are added on the leftmost ends in Figs. 15 and 16. The third party is a party other than the searcher concerned in the granularity negotiation processing and an information provider who provides information in response to a search request and is concerned in the granularity negotiation processing. Therefore, when a plurality of information providers provide information in response to one search request, the third party may be one of the database holders providing information. The third party may be a participant who performs a search only. The third party sends a request for registration of information (such as a third party disclosure restriction key, the detail will be described layer) necessary for performing the third party disclosure restriction processing to the search mediation system 20 in advance (S10 in Fig. 15). The search mediation system 20 receives the request for registration of setting information from the third party and records the setting information in a predetermined table in storing means of the server together with the registration request information of the searcher and the registration request information of information providers (S701). After the processing of issuing a search expression from the searcher to the search mediation system 20 (S22 in Fig. 16) is performed, the selection of information providers (S710), the search of the database of each information provider (S32 and S34), the reception of the query results by the search mediation system 20 (S720), and the processing of negotiating the granularity between the searcher and the information provider who provides the query results (S730) are performed as in embodiment 1. Next, if the data of information provision from each information provider to the searcher that is determined by the granularity negotiation processing (S730) includes data corresponding to the third party disclosure restriction key, third party disclosure restriction processing (S740) is performed on the information to be provided from the information provider to the searcher. The charges to the searcher and the third party and shares to the information providers are computed for the provided information determined based on the results of the third party disclosure restriction processing (S751). Then the provision of data to the searcher, the notification of payment and billing to the searcher, the notification of payment and billing to the third party, and the notification of the shares to the information providers are performed (S761). As described above, in the second embodiment, the largest difference from the system according to the first embodiment is that the disclosure restriction processing may be performed by a third party. Hereinafter, the configuration of the functions of the information provision system according to the second embodiment, the information set by a third party, and the third party disclosure restriction processing are described specifically.

### (Outline of the information provision system according to the second embodiment)

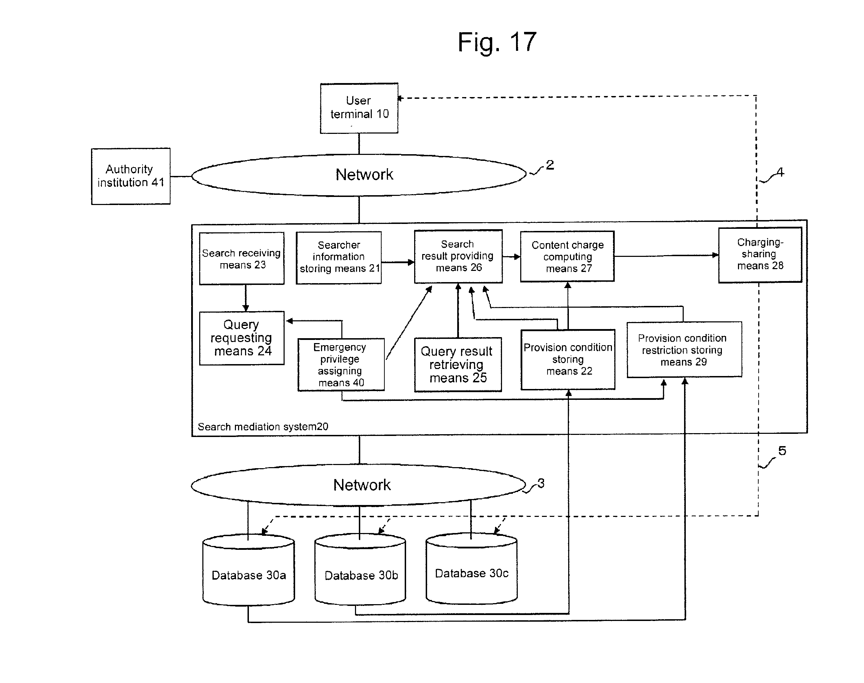

Fig. 17 is a block diagram of the information provision system according to the second embodiment. Components represented by the same numerals as those in Fig. 1 are the same components as those of the first embodiment, and the description thereof is omitted.
A description will be given of only parts different from those in Fig. 1. Reference numeral 29 represents provision condition restriction storing means. As in the searcher information storing means 21 and the provision condition storing means 22, a storage area for the provision condition restriction storing means 29 is provided in the mass storage system in the server computer operated as the search mediation system 20. The information necessary for the disclosure restriction by a third party is registered. The search result providing means 26 makes the final decision on the information to be provided by referring not only to the contents of the provision condition storing means 22 but also to the contents of the provision condition restriction storing means 29. Reference numeral 40 represents emergency privilege assigning means, and 41 represents a server of an "authority institute." The emergency privilege assigning means 40 and the "authority institute" will be described later. First, only the third party disclosure restriction function of the information provision system of the second embodiment is described.

### (Information set for third party disclosure restriction)

Next, a detailed description is given of the information set for third party disclosure restriction.

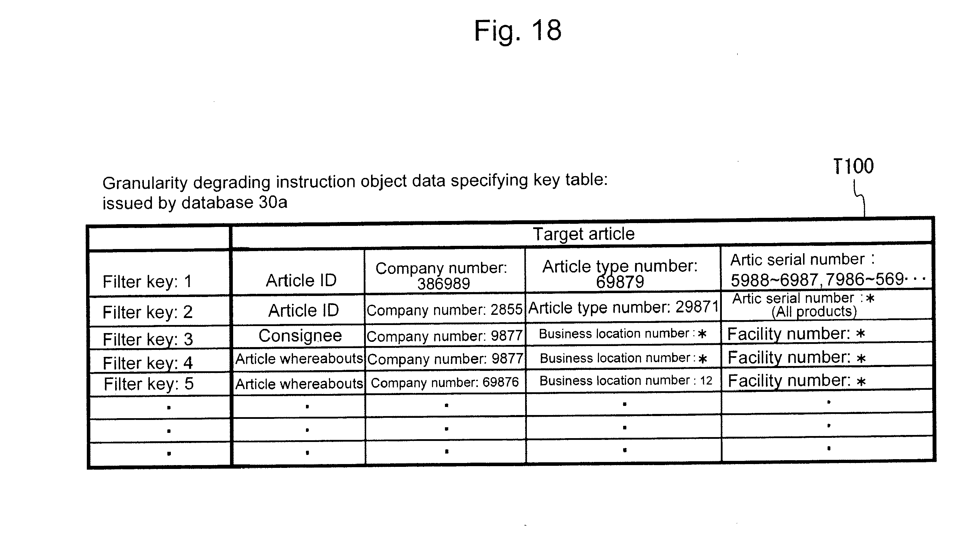

Fig. 18 is a granularity degrading instruction object data key table (T100) specified by a third party. Key information that triggers search restriction processing performed by a participant is registered in this table. Each row in T100 represents information for specifying one disclosure restriction key or information related to the disclosure restriction key. Numbers for distinguishing keys are recorded in the first column in T100. The second column represents the type of the item represented by the key. More specifically, any one of items, such as article ID, consignee, and article whereabouts, in a data record provided to a searcher as search results is specified. The third and higher columns represent detailed information of the keys. The meanings of the information registered in the column cells in a single row are slightly different, depending on the item represented by the key. When the item represented by a key is article ID, company number, article type number, and individual article numbers are set in the third to fifth columns. The article type number can be considered as information corresponding to the GTIN code, and the individual article numbers can be considered as serial numbers. When the item represented by a key is an article whereabouts, company number, business establishment number, and facility number are set in the third to fifth columns. When the item represented by a key is a consignee, company number, business location number, and facility number are set in the third to fifth columns. However, when a disclosure restriction key is set, assignments to the fourth and fifth columns may be appropriately omitted. In such a case, "* (asterisk)" is provided as shown in Fig. 18.

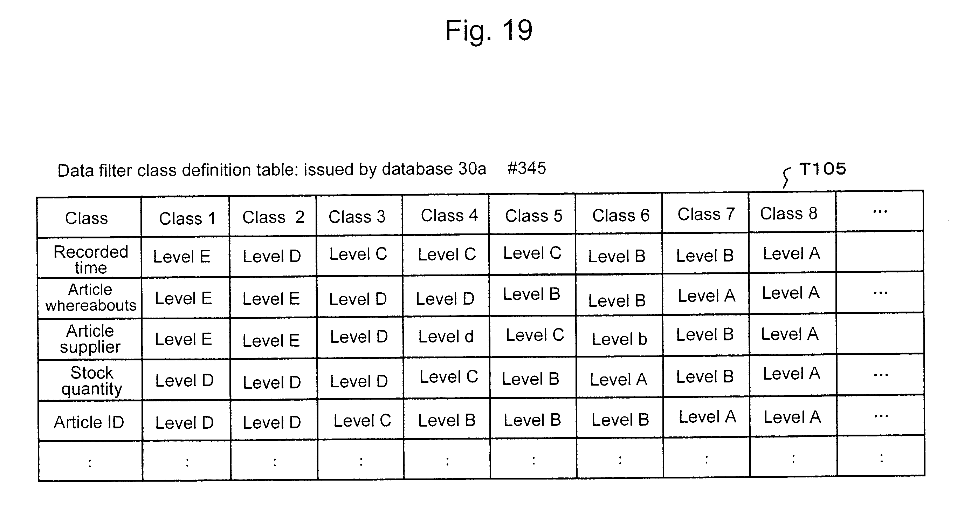

In the following description, a participant X who is the holder of a database 30x sets the information for the third party disclosure restriction. Since the participant X serves also as an information provider, the participant X has a data filter class definition table (T105) set thereby, as shown in Fig. 19. The database 30x is an independent database which allows access from the search mediation system 20, as in the databases 30a and 30b shown in Fig. 17. Although not shown in Fig. 17, the database 30x may be connected to the network 3 (or may be any one of the databases 30b and 30c).

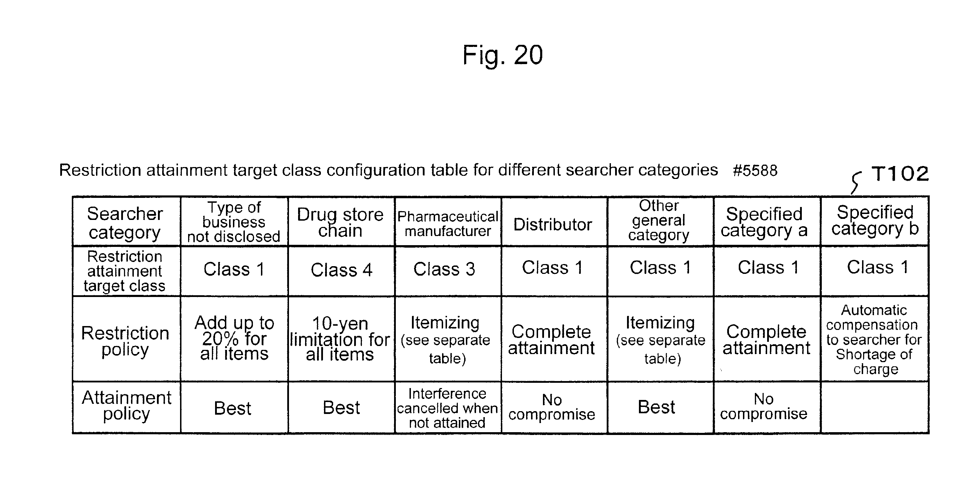

Fig 20 is a restriction attainment target class setting table (T102) for different searcher categories that is set by the participant X. The participant X sets the degree of the disclosure restriction (restriction attainment target class) on the basis of the category of each searcher and a disclosure restriction processing rule therefor using T102. The degree of disclosure restriction (restriction attainment target class) is specified in the second row of table 102 on the basis of the classes defined in a class definition table (T101). A "restriction policy" of the disclosure restriction processing rule is set in the third row in the table, and an "attainment policy" is set in the fourth row. The meaning of the restriction policy is the same as the meaning of the "negotiation policy" that is stored in the searcher information storing means 21 and used to specify the rule of the granularity negotiation processing. More specifically, the restriction policy is registered preconditions for a price that is offered by a third party to coarsen the granularity of information when some data requires disclosure restriction and if the information granularity of the data is finer than the granularity set by the restriction attainment target class. The "attainment policy" is the same as the "attainment policy" that is stored in the searcher information storing means 21 and used to specify the rule of the granularity negotiation processing. More specifically, the "attainment policy" defines a policy for terminating the restriction processing (how to compromise) when the granularity of the disclosure information provided by a database creator does not agree with the granularity demanded by a third party.

When the searcher is A001, the type of business is "drug store chain." Therefore, it is desirable for the participant X that the data to be provided to A001 be altered into class 4 (defined by the participant X) using table T102. In such a case, (the restriction policy, the attainment policy) are (10-yen limitation for all items, best). Fig. 19 is a class definition table (T105) defined by the participant X. As can be seen from this table, for example, level B is the granularity of an article ID desired by X.

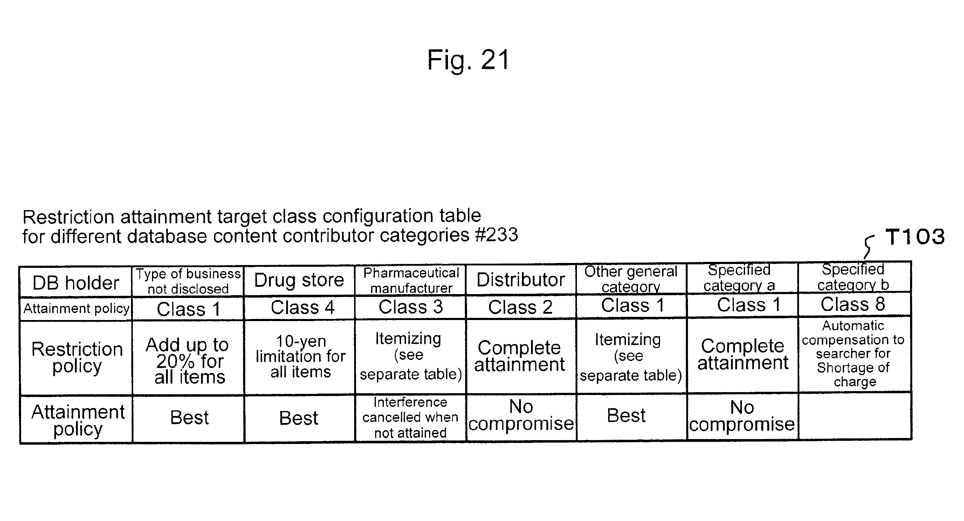

Fig. 21 is a restriction attainment target class setting table (T103) for different database information provider categories that is set by the participant X. The participant X sets the degree of the disclosure restriction (restriction attainment target class) and the disclosure restriction processing rule therefor for each of the database information provider category using T103. The degree of the disclosure restriction (restriction attainment target class) is specified in the second row of the table on the basis of the classes defined in the class definition table (T101). The "restriction policy" of the disclosure restriction processing rule is set in the third row of the table, and the "attainment policy" is set in the fourth row. These are the same as in the restriction attainment target class setting table (T102) for different searcher categories. When the type of business of the information provider 30a is "pharmaceutical manufacture," it is desirable for the participant X that the data provided from 30a be altered into class 3 (defined by the participant X) using Table T103. In such a case, (the restriction policy, the attainment policy) are (different for different items, interference cancelled when not attained). As can be seen from table T105, for example, level C is the granularity of the article ID desired by X.

The information set by the third party X for the third party disclosure restriction includes: four tables of the granularity degrading instruction object data key table (T100), the data filter class definition table (T101), the restriction attainment target class setting table (T102) for different searcher categories, and the restriction attainment target class setting table (T103) for different database information providers; and preference instruction information for giving privilege to one of T102 and T103. When the data provided by the holder of a database includes data to which disclosure restriction must be applied (data corresponding to one of the disclosure restriction keys), the third party finds a category assigned to a provider of the data on the basis of table T103 and a category assigned to a receiver of the data on the basis of table T102. Each of these two categories has a restriction attainment target class. Therefore, when the restriction attainment target class specified by table T103 is different from the restriction attainment target class specified by table T102, a rule for giving privilege to one of them must be defined as a preferential instruction. Such information is registered and stored in the provision condition restriction storing means 29.

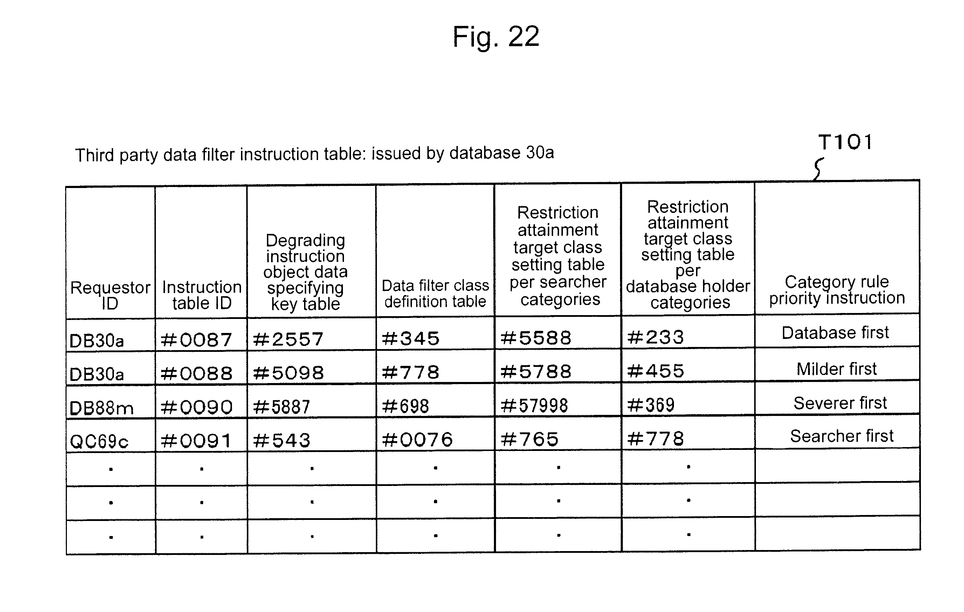

Fig. 22 is a third party data filter instruction table (T104). The search mediation system 20 records information (tables T100 to T103) requested by participants who want to made the third party disclosure restriction in the provision condition restriction storing means 29, creates a list including the contents of the requests from all the third party disclosure restriction requestors as the third party data filter instruction table (T104), and records this table in the provision condition restriction storing means 29. Links to the four tables (tables T100 to T103) necessary for the disclosure restriction processing and the privilege instruction information for giving privilege to one of tables T102 and T103 are recorded in a row of the third party data filter instruction table (T104) for each registration request from the third party. In table T104, the requestor ID of a registration requestor is recorded in the first column. An instruction table ID in the second column is an ID uniquely assigned to each row (corresponding to one record) of this table. The information set by one registration request from the third party, i.e., an information set including the links to tables T100 to T103 and the privilege instruction for giving privilege to one of T102 and T103, which are the contents of one row of table T104, can be changed for each registration request (the above information set is referred to as a third party disclosure restriction information set). In Fig. 22, the records represented by instruction table IDs #0087 and #0088 are linked to reference granularity degrading instruction object data key tables #2557 and #5098, respectively, but are set by the same database holder.

### (Processing flow of the third party disclosure restriction)

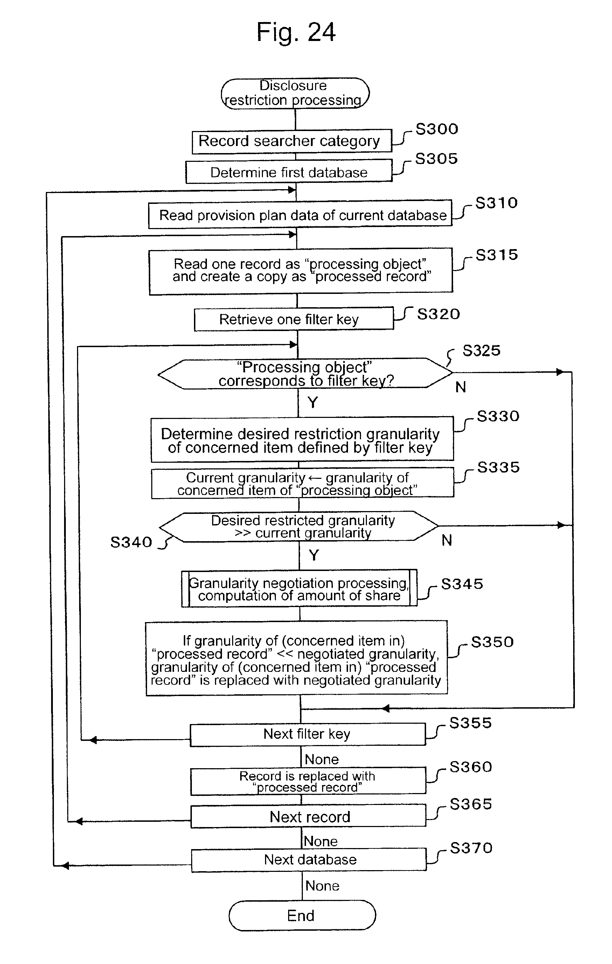

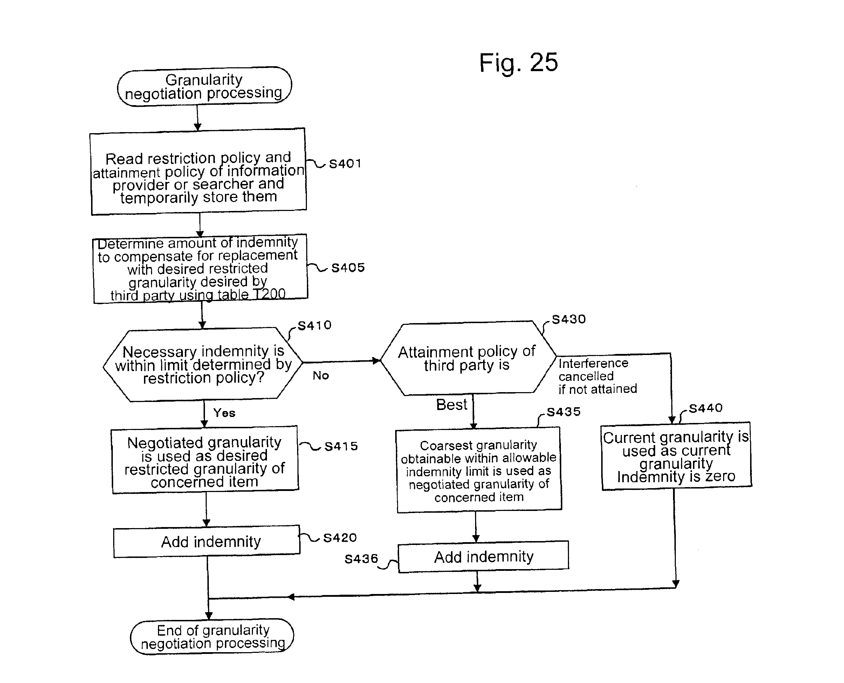

Next, referring to Figs. 24 and 25, a description will be given of detailed operation flows of the disclosure restriction processing by the third party and the granularity negotiation processing associated therewith. Suppose that processing step S730 in Fig. 16 has been completed. Therefore, the search result providing means 26 holds the information (information to be provided) provided from each information provider that has been subjected to the processing of negotiating granularity with the searcher in a predetermined area in storage means of the search mediation system 2020, the information being stored for the each information provider. When the process proceeds to processing S740 in Fig. 16, the search result providing means first determines a searcher category from the searcher ID that is to be consulted later, and the determined searcher category is stored (S300 in Fig. 24). Next, a first information provider is selected from among the information providers who contribute data to be provided (S305). The data to be provided from the first provider is sent to a working data storage area of the search result providing means 26. At this time, the category of the first provider is also recorded (S310). One record is read from the working data storage area and used as a "processing object," and a copy of this "processing object" is created and used as a "processed record" (S315).

A first disclosure restriction key is retrieved by referring to tables T101 and T100 (S320). Then a determination is made whether or not the "processing object" corresponds to the disclosure restriction key. Since the disclosure restriction key is set as a condition for a particular item of a record, attention is focused on the value of the particular item of the "processing object" (S325). If no correspondence is found, the process jumps to S355. If a correspondence is found, the desired restricted granularity of the particular item specified by the disclosure restriction key is determined by referring to the third party disclosure restriction information set that specifies the disclosure restriction key (S330). In this processing, restriction target attainment classes are determined by referring to the categories of the searcher and the information provider that have been recorded in S300 and S310 and to corresponding tables T102 and T103 reached through the links in the fifth and sixth columns of table T101. The privilege instruction is used to specify one of the restriction target classes as a key restriction target class, and the level of the particular item is determined, using the key restriction target class, from the data filter class definition table T105 that is set by the third party. Next, the desired restricted granularity of the particular item is determined by referring to a granularity processing rule table set by the third party using the above-determined level as a key (for convenience, this table is assumed to be the same as the table in Fig. 3 set by the information provider 30a).

Next, a comparison between the desired restricted granularity and the granularity of the particular item in the "processing object" (current granularity) is made to determine which is coarser (S335 and S340). If the current granularity is equal to or coarser than the desired restricted granularity, no additional processing is performed, and the process jumps to S335. If the current granularity is finer than the desired restricted granularity for participant X, the granularity negotiation processing and processing of computing an indemnity to be paid by the third party to the information provider are performed. A detailed description of such processing will be given later. As a result of the granularity negotiation processing, the negotiated granularity of the particular item is determined (S345). Then a comparison is made between the negotiated granularity and the granularity of the particular item in the "processed record." The initial value of the granularity of the particular item in the "processed record" is the granularity set in S315 before the disclosure restriction processing. If the negotiated granularity (the granularity determined using the current disclosure restriction key) is coarser than the granularity of the particular item in the "processed record," the granularity of the particular item in the "processed record" is replaced with the negotiated granularity. If not, the replacement with the negotiated granularity is not performed (S350). Therefore, the granularity of each item in the "processed record" is held at the coarsest level among the negotiated granularities obtained by the granularity negotiations performed based on the disclosure restriction keys used (S355). S325 to S355 are repeated on the record (= "processing object") for all the disclosure restriction keys recorded in T101 and T100. After the processing is completed for all the disclosure restriction keys, the "processed" record replaces the "processing object" read in S315 and is used as a record of the information to be provided (S360). The above processing is performed on all the records of data to be provided by a single information provider (S365) and is repeated for all the information providers (S370). Therefore, when one or more disclosure restriction keys are involved in the data to be provided, the data is overwritten at the coarsest granularity level after negotiation.

### (Granularity negotiation processing and indemnity computation processing for third party disclosure restriction)

Fig. 25 is a flowchart describing the processing in S345 in Fig. 24 in more detail. If the desired restricted granularity is coarser than the granularity (current granularity) of the particular item in the target "processing object" for the disclosure restriction key currently used, negotiation processing for determining whether or not the current granularity can be used as the desired restricted granularity is performed, and the indemnity necessary for this processing is computed.

First, the restriction policy and attainment policy of the third party against the information provider or the searcher are obtained by referring to table T103 or T102 and temporarily stored (S401). The table used differs depending on the direction of the category rule privilege instruction (the contents in the rightmost column of table T101) in the third party disclosure restriction information set contained in the disclosure restriction key. (The table used when the desired restricted granularity is determined in S330 is used.) Next, the amount of the indemnity to be paid to the information provider to compensate for the replacement of the current granularity with the desired restricted granularity is determined for each record of data by referring to table T200 (S405). Then a determination is made whether or not the amount of the indemnity is within the limit defined by the restriction policy (S410). If the amount of the indemnity is within the limit or (the restriction policy, the attainment policy) = (complete attainment, no compromise), the desired restricted granularity of the particular item is used as the negotiated granularity (S415). The amount of the indemnity necessary for the above processing is added to the indemnity to be paid by the third party to the information provider (S420). If the amount of the indemnity exceeds the limit defined by the restriction policy, the process is branched according to whether the attainment policy is "best" or "interference cancelled when not attained" (S430). If the attainment policy = "best," the coarsest granularity obtained within the allowable indemnity limit defined by the restriction policy is determined using table T200, and this granularity is used as the negotiated granularity of the particular item (S435). The amount of the indemnity necessary for the above processing is added to the indemnity to be paid by the third party to the information provider (S436). If the attainment policy = "interference cancelled when not attained," the current granularity is used as the negotiated granularity. Since the granularity is not coarsened, the indemnity is not added (S440).

In the procedure for determining the final granularity, a comparison is sequentially made between the provision information granularity set by the information provider as a starting granularity and the provision information granularities desired by third parties who want to impose restrictions. Then if the negotiation to alter the granularity to a severer (coarser) level is completed successfully, the granularity of the information to be actually provided is renewed. However, this is an exemplary algorithm for determining the granularity provided, and any of other methods may be used. In another exemplary method, all third parties who want to assign disclosure granularities coarser than the granularity desired by an information provider to an item of the information provided by the information provider are ranked. More specifically, the disclosure granularities desired by the third parties are re-arranged in the order of their severity, and the third parties are thereby ranked as third party (1), third party (2),... as indices. The above procedure is repeated for all the items of the provision information. Let k = 1, then the information provider negotiates with third party (k). The rank k of the third parity is changed to 2, 3,... until the negotiated granularity is determined. If the negotiated granularity is determined for the first time at k = n, the amount of the indemnity necessary for the disclosure restriction is computed for each of third parties (m) (n <= m). At this granularity, the provision desired by the each of third parties (m) (n <= m) is satisfied. The results obtained by this procedure are the same as those obtained by the flow shown in Fig. 24. However, when the number of the concerned third parties is expected to be small, the processing speed of this algorithm is expected to be faster.

The indemnity to be paid by a third party to each information provider is finally notified to the content charge computing means 27.

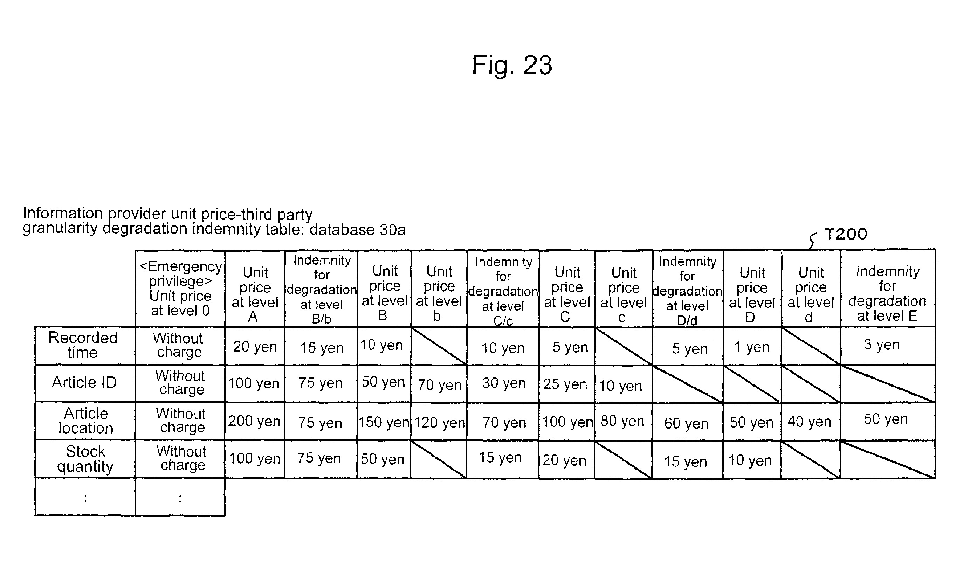

Fig. 23 is a third party granularity degradation indemnity table (T200) set by an information provider. This table is used also as a table of unit prices of information provision. In other words, this table also includes the contents of Fig. 9. In S420 and S436 described above, the amount of the indemnity is computed by referring to this table. For example, when the restriction on the granularity of the article ID is altered from level B to level C, the third party must pay 30 yen for one item, as shown in the second row and the sixth column of table T200. When the final results are provided to the searcher at that level, the searcher must pay 25 yen as the charge for one search. However, since the charge at the initial level B is 50 yen, the information provision price is reduced by the amount corresponding to the degree of coarsening of granularity. The content charge computing means 27 registers, to the charging-sharing means 28, the filtering processing charge to be billed to the account of the participant X (the holder of the database 30) by, for example, referring to table T200. The charging-sharing means 28 charges the processing charge to X who is the requestor of the third party disclosure restriction processing. When the requestor is one of the data providers, the processing charge can be subtracted from the reward received as a data provider for other searches. The collected filtering processing charges are distributed to the data providers with the processing charges for transit systems subtracted.

The operation of the search result providing means 26 for performing the third party disclosure restriction processing by referring to the provision information restriction storing means 29 has been described in detail using the flowcharts shown in Figs. 24 and 25. In the described operation, if a specific item in data to be provided corresponds to disclosure restriction keys set by a plurality of different third parties P and Q, the disclosure restriction processing is performed for both P and Q, and a coarser one of the granularities in the results for P and Q is used as the level of the negotiated granularity. In this case, both P and Q must pay to the holder of the database the indemnities necessary to apply the granularities determined based on the results of the granularity negotiation processing performed for P and Q. This is because, even when one of them requires a milder disclosure restriction than the other, the information is provided at the severest disclosure restriction level and all the third parties thereby achieve the purpose of their disclosure restriction requests. However, how to charge the third parties who impose disclosure restrictions for the indemnities for the loss of the rewards from the searcher to the holder of the database for the provision of information at a finer granularity is determined by the rules of business. Various embodiments may be available (for example, the indemnities are equally divided between P and Q).

Preferred embodiment 2 of the present invention has been described above. In embodiment 2, when the demand granularity desired by the searcher is not satisfied, the searcher cannot explicitly find that the cause is on the information provider side or is interference with a third party.

### (Search with emergency privilege)

In both embodiments 1 and 2, particularly in the information provision system according to embodiment 2, the acquisition of detailed information at a granularity necessary for the searcher can be restricted based on the advantages and disadvantages of various concerned parties. However, under certain search circumstances, the degradation of the granularity and the concealment of the location of the information can adversely affect common welfare. For example, the whereabouts of "recalled" faulty products must be identified, and the products must be recalled immediately.

Accordingly, for the purpose of ensuring the public interest under a state of emergency, the search mediation system 20 is required to have an "emergency privilege" assigning function that can override almost all granularity restrictions. The databases of manufactures related to an accident can be individually searched by a public organization, for example, under warrant. However, after the products are shipped and delivered to distributors, a general search cannot be performed using a conventional method. If access to information owned by temporary holders of the products or holders who are not aware of the recalled products is allowed through the search mediation system 20, the adaptability to social demands is expected to be improved significantly. Therefore, the privilege means for allowing access to detailed information that may be hidden can contribute to the public interest and has a significant meaning because of its emergency search function that can override various restrictions.

In the following description, the term "authority institution" is collectively used for industrial institutions, public institutions, local governments, and national administrative institutions that are allowed to perform emergency collection of information about specific products such as recalled products and various preferential or compulsory inspections for the purpose of public and private interest and allow to issue public instructions, public approvals, and written orders. Search processing performed by the search mediation system 20 in response to a search request from an authority institution with an authentic electronic signature is referred to as an "emergency privileged search."

### (Emergency privilege assigning means 40)

The search mediation system 20 of the information provision system according to the second embodiment includes an emergency privilege assigning means 40. The emergency privilege assigning means 40 determines the authenticity of the signature of an authorize institute and stores the identifier of a distribution search expression having privilege for the purpose of a comparison with a search expression identifier attached to a response. Therefore, the emergency privilege assigning means 40 includes storage means for storing an electric certificate used as the identification certificate of the authority institution and means for referring to an authorized identification institution.

### (Flow of emergency privileged search)

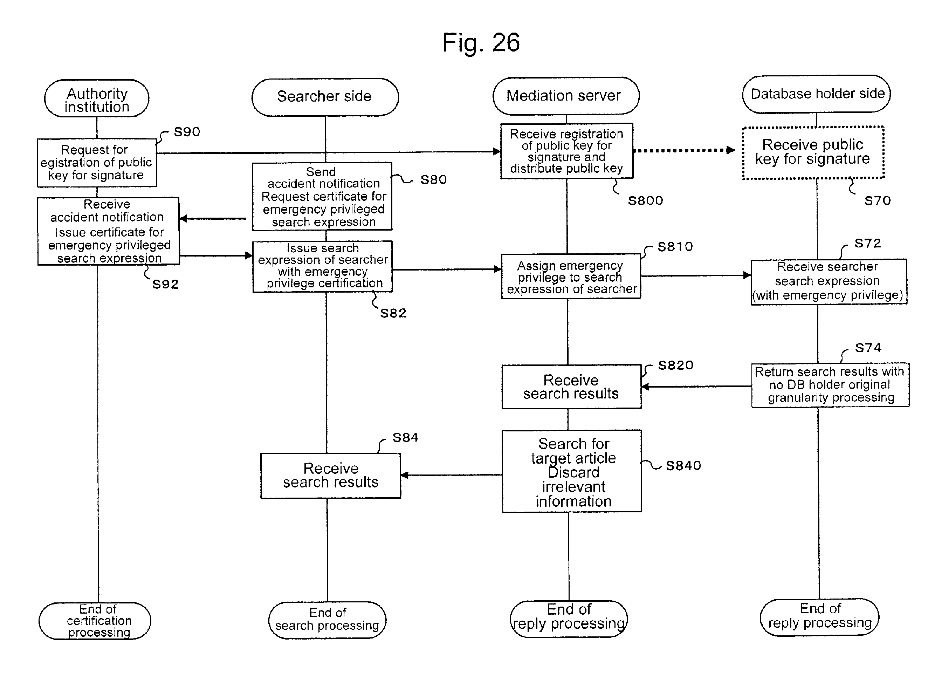

Fig. 26 is a flowchart describing the processing flow of an emergency privileged search in the information provision system according to the second embodiment. Hereinafter, a description will be given of the processing flow of the emergency privileged search with reference to Fig. 26.

First, a searcher (a person concerned in an accident and so on) creates an emergency privileged search expression for obtaining information necessary for fixing the crucial situation, and a request is submitted to a competent authority institution using a predetermined protocol so that the electronic signature of the authority institution is given to the search expression (S80). This request, of course, includes the electronic signature of the searcher for verifying the authenticity of the searcher. No particular limitation is imposed on the method of mutual authentication using electronic signatures. At present, the use of the mechanism of PKI (public key infrastructure) is the most realistic method. Fig. 26 is drawn to include steps (S90, S800, and S70) for mutual authentication using PKI. More specifically, the authority institution distributes its public key; the search mediation system 20 receives the public key and registers the public key in its storage means; and the public key is distributed to information providers.

The authority institution receives the request. If the identity of the sender is verified, the authority institution is informed at this point that the request deals with the accident. Therefore, the authority institution returns to the searcher the emergency privileged search expression, which is the contents of the received request, with the electronic signature of the authority institution given thereto (S92).

The searcher sends to the search mediation system 20 a search request including the search expression (emergency privileged search expression) having the electronic signature of the authority institution attached thereto (S82).

The search mediation system 20 detects that an unordinary electronic signature made by someone other than the direct sender is attached to the received search request. The emergency privilege assigning means 40 determines, using a predetermined procedure, whether or not the above electronic signature is made by an authorized authority institution. If yes, the emergency privilege assigning means 40 specifies a search target article described in the search expression authenticated by the authority institution (which is generally specified as its serial number, lot number, or a set of year, month, and day of the manufacturing date(s) or term of the article). Generally, the search is performed using an information item for specifying the article, such as the type number of the article. However, the search may be performed based on a location and time as keys if, for example, an article stored in a certain location for a certain period is contaminated by environmental influence. In such a case, all the contaminated or polluted articles are specified, and information items that must be preserved for the purpose of specifying the search targets and their locations are separated from information items that are not related to the specified search targets and should be kept secret from the searcher. Then, each search target is represented by a set of information (a key number, the type of the item represented by the key, and the detailed information of the key). This expression format is the same as that for the granularity degrading instruction object data key table (T100). More specifically, any of items, such as an article ID, consignee, and article whereabouts, included in a data record provided to the searcher as the search results is specified as the type of the item represented by the key. When the item represented by the key is an article ID, company number, article type number, and individual article numbers are set as third to fifth data items. This information is registered in the provision condition restriction storing means 29 as an emergency privileged search target data key table (not shown), as in the granularity degrading instruction object data key table (T100).

All the participating databases 30a to 30c are retrieved through the query requesting means 24 using the search expression verified as an "emergency privileged search" (S810). At the same time, a search identifier uniquely numbered for each search on all the participating databases is recorded, together with a flag representing the emergency privileged search, in a predetermined storage area of the search mediation system 20 (a storage area that can be accessed from the search result providing means 26).

Each information provider receives a query request for the emergency privileged search (S72). The information provider returns the query results to the search mediation system 20 in the same manner as that for responding to an ordinary search from the search mediation system 20 (S72). Although not described previously, it may be assumed that, when ordinary query results are returned to the search mediation system 20, some information provider uses original granularity processing as a part of the ordinary processing performed on the provider side. Such an information provider is requested to provide the query results without the original granularity processing when a response to the emergency privileged search is sent (S72).

The search mediation system 20 receives the query results acquired from each information provider using the function of the query result acquiring means 25 (S820). The search mediation system 20 receives the query results provided from all the information providers to which the query request is sent and collects the query results for each query request using a corresponding search identifier contained in the query results as a key. When the flag representing the emergency privileged search is attached to the identifier, the granularity negotiation processing (S730 in Fig. 16) performed when the provision information granularity of an information provider does not satisfy the demand granularity of the searcher is not performed. In addition, the disclosure restriction processing (S740 in Fig. 16) performed in response to the request from a third party is also not performed (S730 and S740 are usually performed). Instead, the emergency privileged search target data key table recorded in the provision condition restriction storing means 29 is consulted to check whether or not data corresponding to the emergency privileged search target is included in each of the records constituting the query results. Then the records containing the corresponding data are collected as the search results to be provided to the searcher with their original granularities (the granularities of the information registered in the databases) unchanged. All the records not containing the data corresponding to the emergency privileged search target are discarded. Thus, when the emergency privileged search target item is, for example, an article ID, the context information of the target article represented by the article ID, such as the company number, article type number, individual article numbers, whereabouts thereof, and recorded time, is selected as a set of search result information. The search result information sets are collected, and retrieving data to the searcher is thereby created (S840).

The search result providing means 26 must be configured such that the retrieval result does not contain information not related to the emergency privileged search target article. As has already been described in Fig. 7, information is recorded in the database 30a and other databases as a record including items such as recorded time, article ID, article whereabouts, stock quantity, supplier, and consignee. Generally, this record corresponds to data obtained by reading one RFID tag using a reader. Therefore, when the reader reads a plurality of tags at one time, a plurality of article IDs included in the information recorded in the plurality of the read tags are recorded in the column of article ID. For example, eight article IDs may be recorded in the column of article ID in one record, and one of them may correspond to the emergency privileged search target article. In such a case, the recorded items for the rest of seven article IDs are not related to the emergency privileged search, and there is no reason to request compulsory provision of the information of such items. Therefore, the search result providing means 26 deletes the elements recorded for the irrelevant article IDs. The emergency privileged search target may be specified as the whereabouts of an article or a combination of the whereabouts of an article and recorded time. In such a case, the above consideration is not required.

The above is the flow of the emergency privileged search.

Preferred embodiments 1 and 2 of the present invention have been described above. However, the present invention is not limited to the above embodiments, and various modifications may be made thereto. For example, embodiment 2 may be configured to include a step of presenting the outline (i.e., the total number of information data items to be provided, the granularity set for each of the items, the ratio thereof, information provision cost of the search, and the like) of the search results to the searcher to allow the searcher to determine in advance whether or not the prepared provision information is acceptable as the search results. This step is performed after the disclosure restriction processing (S740 in Fig. 16) performed on request from a third party. In this case, a processing flow that allows re-negotiation processing such as processing for improving the granularity to be performed upon request from the searcher may be used. In both cases, the searcher cannot explicitly find that the cause that the demand granularity desired by the searcher is not satisfied is on the information provider side or the interference with a third party. The searcher can find the cause only if informed of the outline (i.e., the total number of items, the granularity set for each of the items, the ratio thereof, and the like) of the requested information just before the disclosure restriction processing requested is performed upon request from the third party. This encourages any third party to request disclosure restriction and increases the convenience of the services provided by the search mediation system of the present invention. Other variations may be possible. For example, a system in which the processing of negotiating the granularity between the searcher and each information provider (step S370 in Fig. 16) is omitted may be used.

### INDUSTRIAL APPLICABILITY

In the present invention, the search mediation system is interposed between a searcher and databases provided by information providers, and the information of the searcher and the provision conditions of the databases are recorded in advance. Disclosable information that varies depending on the searcher who made a search request is extracted from the searched information, or the searched information is provided after the alterations into a disclosable form that varies depending on the searcher and the database holder who intend to restrict the disclosure of business confidence to the searcher. Therefore, the information to be disclosed can be controlled depending on the searcher who wants to access to the information. The providers of information through the databases can obtain information usage charges according to the amounts of the provided information and can recover the costs for creating physical distribution management information. The search mediation system can recover the cost for information granularity reduction processing from the information providers and can use the recovered cost as the operation cost of the system.

Also, in the present invention, the search mediation system is interposed between a searcher and databases provided by information providers, and the information of the searcher and the provision conditions of the databases are recorded in advance. Disclosable information that varies depending on the searcher who made a search request is extracted from the searched information, or the searched information is provided after the alterations into a disclosable form that varies depending on the searcher. Therefore, the information to be disclosed can be controlled depending on the searcher who wants to access to the information. In addition, any party who is involved in the physical distribution management information provided to the searcher and has registered the third party disclosure restriction information in the search mediation system in advance can impose restrictions on the information provided to the searcher in a rational manner. Therefore, participation of the holders of databases who intend to provide information to the search mediation system is facilitated, and a system with high convenience can be achieved.

## Claims

1. A system for mediating a search when a plurality of databases held by different parties are searched from a user terminal, the system comprising:
searcher information storing means for storing information of a searcher;
provision condition storing means for storing a provision condition of each of the plurality of databases, the provision condition being represented as a rule for defining a granularity of information provided as a search result;
search receiving means for receiving a search request from the user terminal;
query requesting means for issuing a request for the search to each of the plurality of databases in response to the search request received;
query result acquiring means for acquiring the search result from the each of the plurality of databases;
search result providing means for extracting information disclosable to the searcher from the acquired search result on the basis of the information of the searcher and the provision condition or converting the acquired search result to a value at an information granularity level disclosable to the searcher on the basis of the information of the searcher and the provision condition, and then providing the extracted information or the converted value to the user terminal;
content charge computing means for computing an information provision charge based on the granularity and the number of items of the provided information extracted by the search result providing means and on and for computing a processing charge for the information provision to thereby compute a charge to the searcher and a share to each of the plurality of databases; and
charging-sharing means for creating a record in which the charge and the share computed by the content charge computing means are recorded in association with identification information of the searcher and identification information of a provider of the provided information.

2. The system for mediating a search according to claim 1, wherein:
the provision condition is represented as a combination of a searcher category and a set of a corresponding granularity processing rule, the searcher category being defined by a registered attribute of the searcher and a disclosure attribute of the searcher;
the granularity processing rule defines the number of granularity levels for each item in each of the plurality of databases and either of a conversion rule or a replacement term, the conversion rule or the replacement term being used to express an original value of the each item at each of the granularity levels; and
the search result providing means determines the searcher category of the searcher on the basis of the provision condition and applies a specific granularity processing rule to original acquired data used as the search result on the basis of the provision condition to create a converted search result that includes a converted item represented in a predetermined expression of each granularity level, and provides the converted search result to the user terminal.

3. The system for mediating a search according to claim 1 or 2, wherein:
the search receiving means extracts the information of the searcher serving as a search requestor from the searcher information storing means and refers to the provision condition storing means using the information of the searcher to specify a database disclosable to the searcher; and
the query requesting means issues queries only to the specified database.

4. The system for mediating a search according to claim 1 or 2, wherein:
when the content charge computing means processes for converting a value of a searched item obtained from any of the plurality of databases to an expression at a necessary granularity level is performed, the content charge computing means computes an information granularity reduction processing cost according to a workload in the processing; and
the charging-sharing means records the information granularity reduction processing cost as a charge to the holder of the any of the plurality of databases, the holder contributing as the information provider.

5. The system for mediating a search according to claim 1 or 2, wherein:
the searcher information storing means allocates storage areas for three items for each searcher , the three items including a "demand granularity" representing an expected information granularity level for the search result, a "negotiation policy" that defines a negotiation policy used for a granularity negotiation performed when the information granularity determined based on the provision condition determined in advance by any of the plurality of databases does not satisfy the demand granularity, and an "attainment policy" that determines a policy for terminating the granularity negotiation; and
When the information granularity determined by the databases does not satisfy the "demand granularity" desired by the searcher, the search result providing means automatically re-determines the information granularity to be provided to the searcher on the basis of contents of the "demand granularity," the "negotiation policy," and the "attainment policy" determined in advance by the searcher and, processes the search result based on the re-determined information granularity, and provides the processed search result.

6. A system for mediating a search when a plurality of databases held by different parties are searched from a user terminal, the system comprising:
searcher information storing means for storing information of a searcher;
provision condition storing means for storing a provision condition of each of the plurality of databases, the provision condition being represented as a rule for defining a granularity of information provided as a search result;
provision condition restriction storing means for storing third party disclosure restriction information containing a disclosure restriction key that is required by a third party to impose a disclosure restriction on data to be provided to the searcher to coarsen the granularity;
search receiving means for receiving a search request from the user terminal;
query requesting means for issuing a query for the search to each of the plurality of databases in response to the search request received;
query result acquiring means for retrieve the query result from the each of the plurality of databases;
search result providing means for extracting information disclosable to the searcher from the retrieved query result on the basis of the information of the searcher and the provision condition or converting the acquired search result to a value at an information granularity level disclosable to the searcher on the basis of the information of the searcher and the provision condition, and then providing the extracted information or the converted value to the user terminal, wherein, when the data to be provided to the searcher corresponds to the disclosure restriction key set by the third party, the third party disclosure restriction information is consulted, and conversion required to meet an information granularity level for the data to be provided to the searcher is performed on the extracted information or the converted value before the extracted information or the converted value is provided to the user terminal;
content charge computing means for computing an information provision charge based on the granularity and the number of items of the provided information extracted by the search result providing means and for computing a processing charge for the information provision to thereby compute a charge to the searcher, a charge to the third party who has requested processing for the disclosure restriction, and a share to each of the plurality of databases; and
charging-sharing means for creating a record in which the charges and the share computed by the content charge computing means are recorded in association with identification information of the searcher, identification information of the third party who has requested processing for the disclosure restriction, and identification information of a provider of the provided information.

7. The search mediation system according to claim 6, wherein:
the provision condition is represented as a combination of a searcher category and a set of corresponding granularity processing rules, the searcher category being defined by a registered attribute of the searcher and a disclosure attribute of the searcher;
the granularity processing rule defines the number of granularity levels for each item in each of the plurality of databases and either of a conversion rule or a replacement term, the conversion rule or the replacement term being used to express an original value of the each item at each of the granularity levels; and
the search result providing means determines the searcher category of the searcher on the basis of the provision condition and applies a specific granularity processing rule to original acquired data of the search result on the basis of the provision condition to create a converted search result that includes a converted item represented in a predetermined expression of each granularity level, and provides the converted search result to the user terminal.

8. The search mediation system according to claim 7, wherein:
the search receiving means extracts the information of the searcher serving as a search requestor from the searcher information storing means and refers to the provision condition storing means using the information of the searcher to specify a database disclosable to the searcher; and
the query requesting means issues queries only to the specified database.

9. The search mediation system according to claim 8, wherein:
the third party disclosure restriction information is a set of four types of information, the four types of information including disclosure restriction key information in which a condition for a value of a specific item in data to be provided is described, information for specifying a desirable granularity of the specific item in the data corresponding to the disclosure restriction key, the desirable granularity being specified to a level desired by the third party, a "restriction policy" that defines a negotiation policy used for a granularity negotiation performed when the data to be provided to the searcher corresponds to the disclosure restriction key and when the granularity of the specific item is finer than the desirable granularity and is required to be processed, and an "attainment policy" that determines a policy for terminating the granularity negotiation; and
when an information granularity of the data to be provided is finer than the "desirable granularity" specified by the third party, the search result providing means automatically re-determines the information granularity to be provided to the searcher on the basis of contents of the "desired granularity," the "restriction policy," and the "attainment policy" determined in advance by the third party, processes the search result based on the re-determined information granularity, and provides the processed search result.

10. The search mediation system according to any one of claims 6 to 9, comprising a function corresponding to an emergency privileged search that is distinguished from an ordinary search, the function being achieved by emergency privilege assigning means including means for recording and storing a public key of an authority institution and verifying authenticity of an electronic signature, wherein, when an electronic signature different from the electronic signature of a sender is attached to a search request received, the emergency privilege assigning means determines whether or not the attached electronic signature is an authentic signature created by the authority institution, and wherein, if the attached electronic signature is authentic, the emergency privilege assigning means creates information for distinguishing the requested search from an ordinary search, records the requested search as an emergency privileged search, and registers a search target specified by the search request as a search target article in an emergency privileged search target data table as a single record;
and wherein the search result providing means is configured such that, when search results of the emergency privileged search are collected, the emergency privileged search target data table is consulted, only a search result record including information of an article corresponding to the search target article is retained with a granularity of the search result record remaining unchanged, the rest of the search result records are discarded to create collected search results, and the collected search results are provided to the searcher.

11. A software program for operating a computer as a search mediation system according to any one of claims 1 to 10.
